# EUROPEAN PATENT APPLICATION

(11) **EP 4 278 881 A1**
(43) Date of publication of application: **22.11.2023**
(21) Application number: 23166251.1
(22) Date of filing: 31.03.2023
(51) Int. Cl.: A01D 34/00, A01D 34/74

(54) **ROBOTIC GARDEN TOOL WITH BLADE HEIGHT ADJUSTMENT**

(30) Priority: 18.05.2022 US 202263343386 P; 01.09.2022 US 202217929248
(71) Applicant: Techtronic Cordless GP, Anderson, SC 29621 (US)
(72) Inventor: LAI, Hok Sum Sam, Hong Kong (CN); NG, Ho Lam, Hong Kong (CN); WANG, Li Feng, Dongguan City (CN); HU, Yong, Dongguan City (CN)
(74) Representative: Novagraaf Group

(57) **Abstract**

A robotic garden tool including a deck, a blade motor configured to rotate a blade about a blade axis, and a mount axially movable with respect to the deck along the blade axis. The garden tool also includes a worm shaft mounted for rotation with respect to the deck about a worm axis, the work shaft forming a threaded interface with the mount such that rotation of the worm shaft about the worm axis causes the mount to move axially with respect to the deck. The garden tool also includes a manual actuator configured to move with respect to the deck in response to receiving a manual actuation force by an operator, where the manual actuator is in operable communication with the worm shaft such that movement of the manual actuator with respect to the deck causes the worm shaft to rotate about the worm axis.

## Description

### CROSS-REFERENCE TO RELATED APPLICATIONS

The present application claims the benefit of co-pending U.S. Provisional Patent Application No. 63/343,386, filed May 18, 2022. The present application also claims benefit of U.S. Patent Application No. 17/929,248, filed September 1, 2022. The entire contents of both are incorporated by reference herein.

### FIELD OF THE INVENTION

The present disclosure relates to a robotic garden tool, such as a robotic lawn mower, having a movable blade for cutting grass or other plants.

### BACKGROUND

During the lawn mowing process, lawn mowers and other cutting tools may have adjustment capabilities to allow the lawn mower to cut the grass or other vegetation at different heights.

### SUMMARY

In one aspect, the disclosure provides a robotic garden tool having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The axis of rotation of the blade intersects the cylindrical volume. The blade is configured to move at least partially in the axial direction in response to movement of the manual actuator.

In another aspect, the disclosure provides a cutting module for a robotic garden tool. The cutting module includes a motor configured to drive a blade about an axis of rotation. The axis of rotation defining an axial direction. The cutting module also includes a blade height adjustment mechanism including a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The motor is disposed at least partially within the cylindrical volume. The manual actuator is configured to move the blade in the axial direction.

In another aspect, the disclosure provides a lawn mower having a deck, a blade, a motor, and a blade height adjustment mechanism. The blade is movably coupled to the deck. The motor is configured to move the blade about an axis of rotation, and the axis of rotation defines an axial direction. The blade height adjustment mechanism includes a manual actuator configured to move in response to manual actuation by an operator. The manual actuator is operably coupled to a cam interface. The cam interface is disposed within a cylindrical volume defined circumferentially by the cam interface and bounded axially by upper and lower distal ends of the cam interface. The motor is disposed at least partially within the cylindrical volume. The blade is configured to move in the axial direction in response to movement of the manual actuator.

In another aspect, a robotic garden tool including a deck, a blade motor configured to rotate a blade about a blade axis, and a mount axially movable with respect to the deck along the blade axis. The blade motor is coupled to the mount. The robotic garden tool further including a worm shaft mounted for rotation with respect to the deck about a worm axis, the work shaft forming a threaded interface with the mount such that rotation of the worm shaft about the worm axis causes the mount to move axially with respect to the deck, and a manual actuator configured to move with respect to the deck in response to receiving a manual actuation force by an operator, where the manual actuator is in operable communication with the worm shaft such that movement of the manual actuator with respect to the deck causes the worm shaft to rotate about the worm axis.

Alternatively or additionally, in any combination, further including a gear train positioned between and in operable communication with both the manual actuator and the worm shaft to transmit a force therebetween.

Alternatively or additionally, in any combination, where the gear train reduces the mechanical advantage of the manual actuator relative to worm shaft.

Alternatively or additionally, in any combination, further including a bracket fixedly coupled to the deck, wherein the bracket includes a first plate, a second plate opposite the first plate, and a channel extending between the first plate and the second plate.

Alternatively or additionally, in any combination, where the channel extends parallel to the axis of rotation.

Alternatively or additionally, in any combination, where the mount further comprises a projection at least partially positioned within and movable along the channel in a direction parallel to the axis of rotation.

Alternatively or additionally, in any combination, where the manual actuator includes a dial rotatable with respect to the deck, and wherein the manual actuator is configured to rotate in response to receiving a manual actuation force by an operator.

Alternatively or additionally, in any combination, where the worm axis is parallel to and offset from the blade axis.

Alternatively or additionally, in any combination, further including comprising a cutting module including a cutting module mount at least partially encompassing the blade, and wherein the blade motor is fixedly coupled to the cutting module mount so that the cutting module mount, the blade motor, and the mount move together as a single unit.

Alternatively or additionally, in any combination, further including an indicia provided on the exterior surface of the garden tool, the indicia is positioned adjacent the manual actuator and is configured to indicate the vertical position of the blade.

In another aspect, a robotic garden tool including a deck, a blade motor configured to rotate a blade about a blade axis, a mount movable with respect to the deck along the blade axis between a first position in which the blade defines a first cutting height and a second position in which the blade defines a second cutting height different than the first cutting height, where the blade motor is coupled to the blade mount so that the blade motor and the mount move together as a single unit, a blade height adjustment motor in operable communication with the mount, where operation of the blade height adjustment motor causes the mount to move between the first position and the second position, a first user input into which a user can enter a desired cutting height, a controller in operable communication with the blade height adjustment motor, and the first input, and wherein the controller is configured to output an adjustment vector to the blade height adjustment motor based at least in part on desired cutting height entered into the first user input.

Alternatively or additionally, in any combination, wherein the mount is movable with respect to the deck along the blade axis between a first position in which the blade defines a first cutting height and a second position in which the blade defines a second cutting height different than the first cutting height The blade motor is fixedly coupled to the blade mount so that the blade motor and the mount move together as a single unit. The robotic garden tool further including a blade height adjustment motor in operable communication with the mount and operation of the blade height adjustment motor causes the mount to move between the first position and the second position. The robotic garden tool including a first user input into which a user can enter a desired cutting height and a controller in operable communication with the blade height adjustment motor and the first input. The controller is configured to output an adjustment vector to the blade height adjustment motor based at least in part on desired cutting height entered into the first user input.

Alternatively or additionally, in any combination, further including a second user input into which the user can enter a desired cutting height, wherein the controller is in operable communication with the second user input, and wherein the controller is configured to output an adjustment vector to the blade height adjustment motor based at least in part on the desired cutting height entered into one of the first user input and the second user input.

Alternatively or additionally, in any combination, where at least one of the first user input and the second user input includes a remote-control device in operable communication with the controller wirelessly.

Alternatively or additionally, in any combination, where at least one of the first user input and the second user input is mounted to the garden tool

Alternatively or additionally, in any combination, further including a manual actuator configured to move with respect to the deck in response to receiving a manual actuation force by an operator and a metering mechanism in operable communication with the manual actuator and configured to output a signal representing the movement of the manual actuator.

Alternatively or additionally, in any combination, where the first input is the metering mechanism.

Alternatively or additionally, in any combination, further including a knob motor configured to rotate the manual actuator with respect to the deck.

In another aspect a robotic garden tool including a deck, a blade motor configured to rotate a blade about a blade axis, a mount axially movable with respect to the deck along the blade axis between a first position, in which the blade defines a first cutting height, and a second position, in which the blade defines a second cutting height different than the first cutting height, where the blade motor is coupled to the mount, a manual actuator configured to move with respect to the deck in response to receiving a manual actuation force by an operator, where the manual actuator is in operable communication with the mount such that movement of the manual actuator with respect to the deck causes the mount to move axially with respect to the deck, and indicia displayed on the exterior surface of the robotic garden tool, where the indicia includes one or more symbols configured to visually display the current cutting height of the blade for a given position of the manual actuator with respect to the deck, and where the indicia is configured change independently of the movement of the manual actuator.

Alternatively or additionally, in any combination, where the manual actuator includes a knob rotatable with respect to the deck.

Alternatively or additionally, in any combination, where the indicia includes one or more graduations positioned circumferentially about the perimeter of the knob.

Alternatively or additionally, in any combination, whre the manual actuator is adjustable between a locked configuration, in which the manual actuator is not movable relative to the deck, and an unlocked configuration, in which the manual actuator is movable relative to the deck.

Other aspects of the disclosure will become apparent by consideration of the detailed description and accompanying drawings.

### BRIEF DESCRIPTION OF THE DRAWINGS

Fig. 1 is a top perspective view of an autonomous lawn mower embodying the disclosure.
Fig. 2 is a cross-sectional view of the autonomous lawn mower of Fig. 1 taken through line 2-2 in Fig. 1.
Fig. 3 is a perspective view of a height adjustment mechanism of the autonomous lawn mower of Fig. 1.
Fig. 4 is a bottom perspective view of a manual actuator and cam surface of the autonomous lawn mower of Fig. 1.
Fig. 5 is the same bottom perspective view of the manual actuator and cam surface of Fig. 3 but further illustrating a cylindrical volume.
Fig. 6 is a perspective view of a portion of the height adjustment mechanism of Fig. 5.
Fig. 7 is a perspective view of the height adjustment mechanism of Fig. 5 in a raised position.
Fig. 8 is a perspective view of the height adjustment mechanism of Fig. 5 in a lowered position.
Fig. 9 is a perspective view of another implementation of a height adjustment mechanism for the autonomous lawn mower of Fig. 1.
Fig. 10 is an exploded view of an alternate height adjustment mechanism.
Fig. 11 is a perspective view of the alternate height adjustment mechanism of Fig. 10.
Fig. 12 is a cross-sectional view of the alternate height adjustment mechanism of Fig. 10 in a raised position.
Fig. 13 is a cross-sectional view of the alternate height adjustment mechanism of Fig. 10 in a lowered position.
Fig. 14 is a schematic view of the alternate height adjustment mechanism of Fig. 10.
Fig. 15 is a schematic view of another alternate height adjustment mechanism.
Fig. 16 is a top view of a control interface and a manual actuator.
Fig. 17 is a schematic view of another alternative height adjustment mechanism.
Fig. 18 is a perspective view of another alternative height adjustment mechanism.
Fig. 18A is a perspective view of another alternative of a mount for use in the height adjustment mechanism of Fig. 18.
Fig. 19 is a side view of another alternative height adjustment mechanism.
Figs. 20A-20C illustrate alternative connectors for use with the height adjustment mechanism of Fig. 19.
Fig. 21 is a side view of the height adjustment mechanism of Fig. 19 with an alternative manual actuator.
Fig. 22 is a section view of another alternative height adjustment mechanism.
Fig. 23 is a detailed section view of the height adjustment mechanism of the height adjustment mechanism of Fig. 22.
Fig. 24 is a section view taken along line 24-24 of Fig. 23.
Fig. 25 is a top view of the height adjustment mechanism of Fig. 22.

### DETAILED DESCRIPTION

Before any implementations of the disclosure are explained in detail, it is to be understood that the disclosure is not limited in its application to the details of construction and the arrangement of components set forth in the following description or illustrated in the following drawings. The disclosure is capable of other implementations and of being practiced or of being carried out in various ways. Also, it is to be understood that the phraseology and terminology used herein are for the purpose of description and should not be regarded as limiting. The terms "approximately", "about", "generally", "substantially", and the like should be understood to mean within standard tolerances, as would be understood by one of ordinary skill in the art.

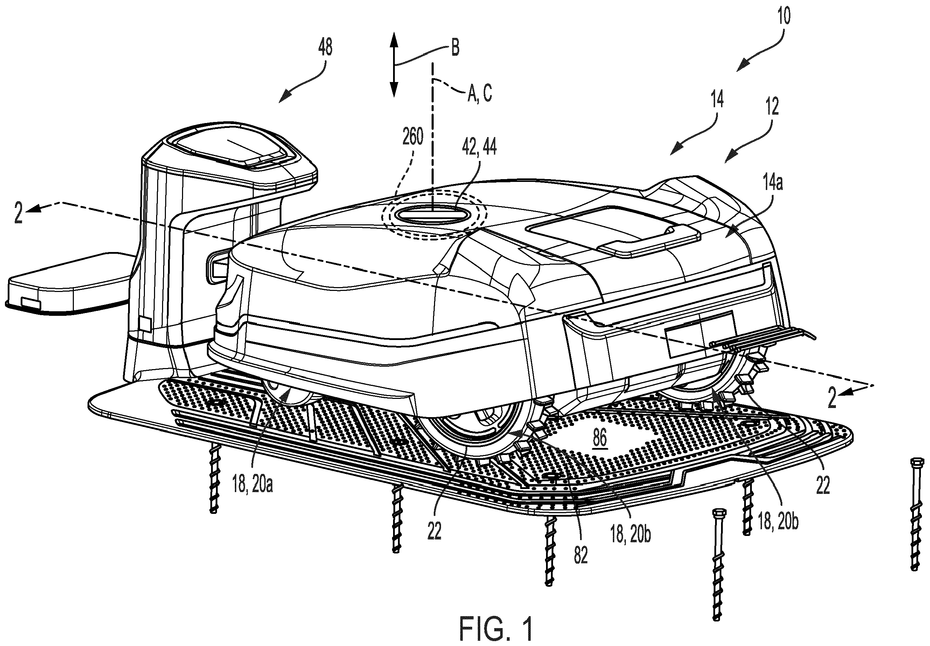

Figs. 1-2 illustrate a garden tool system 10. For example, the garden tool system 10 may include a garden tool 12, such as a lawn mower 12 (as shown), or in other implementations may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 12 may include a vacuum cleaner, a trimmer, a string trimmer, a hedge trimmer, a sweeper, a cutter, a plow, a blower, a snow blower, etc. In the illustrated implementation, the garden tool system 10 includes the lawn mower 12 and a charging station 48. The garden tool 12 may be autonomous, semi-autonomous, or not autonomous.

For example, the lawn mower may include a controller (not shown) having a programmable processor (e.g., a microprocessor, a microcontroller, or another suitable programmable device), a memory, and a human-machine interface. The memory may include, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller may also, or alternatively, include integrated circuits and/or analog devices, e.g., transistors, comparators, operational amplifiers, etc., to execute the logic and control signals described herein. The controller includes a plurality of inputs and outputs to and from various components of the lawn mower. The controller is configured to provide control signals to the outputs and to receive data and/or signals (e.g., sensor data, user input signals, etc.) from the inputs. The inputs and outputs are in communication with the controller, e.g., by way of hard-wired and/or wireless communications such as by satellite, internet, mobile telecommunications technology, a frequency, a wavelength, Bluetooth^{®}, or the like. The controller may include a navigation system, which may include one or more of a global positioning system (GPS), beacons, sensors such as image sensors, ultrasonic sensors, wire sensors, and an algorithm for navigating an area to be mowed. However, in other implementations, the lawn mower may be non-autonomous.

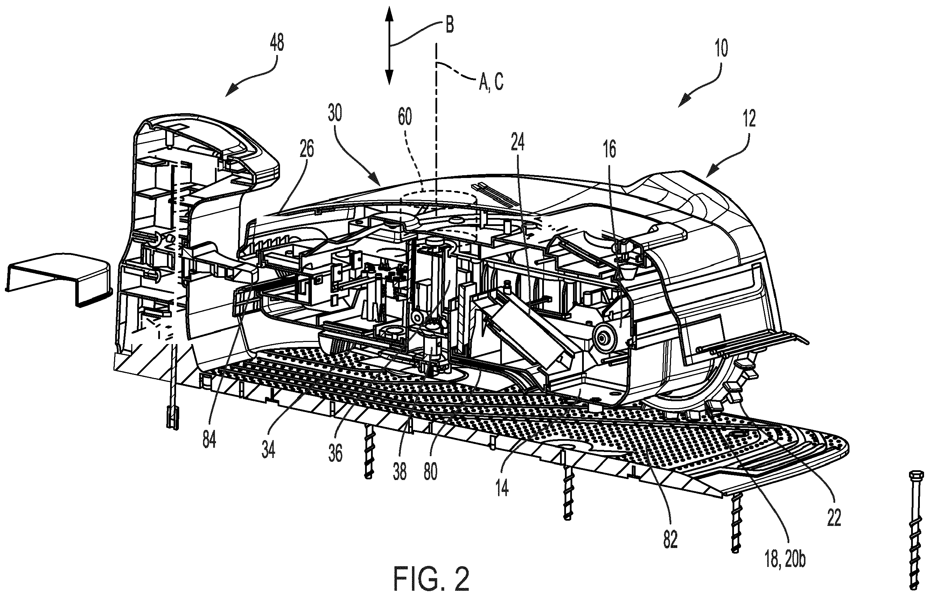

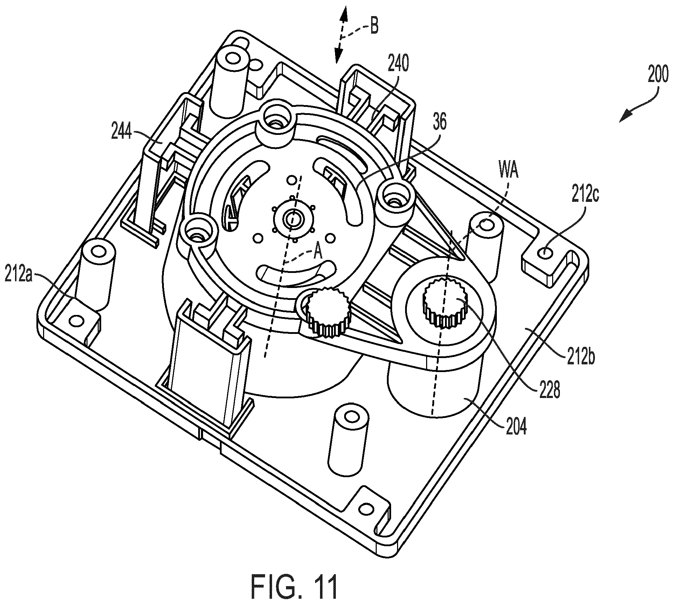

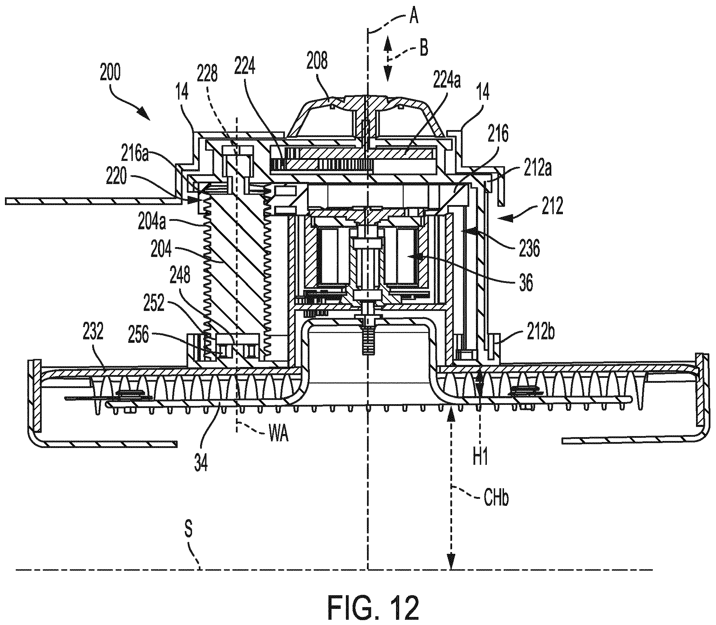

With reference to Fig. 2, the lawn mower 12 includes a deck 14 for supporting various components of the lawn mower 12, as will be described in greater detail below. The lawn mower 12 includes at least one prime mover 16 for providing tractive effort to move the lawn mower 12 across a support surface S (Figs. 11, 12), such as the charging station 48 or a lawn to be mowed. The at least one prime mover 16 may be supported by the deck 14. For example, the at least one prime mover 16 may include one or more electric motors 16 in the illustrated implementation. However, in other implementations the prime mover 16 may include another type of motor, a gasoline engine, or the like, in any suitable quantity and combination.

The lawn mower 12 also includes a plurality of wheels 18 (Fig. 1), which may be supported by the deck 14 (Fig. 2), for converting the tractive effort into motion of the lawn mower 12 on the support surface. Each of the plurality of wheels 18 supports a tire 22 in the illustrated implementation. However, the plurality of wheels 18 may support any combination of one or more of tires, continuous tracks, or the like in other implementations. The plurality of wheels 18 includes two front wheels 20a and two rear wheels 20b, but other quantities of wheels may be employed in other implementations. In the illustrated implementation, the at least one prime mover 16 includes one of the one or more electric motors dedicated for each of the two rear wheels 20b to apply torque thereto, and the two front wheels 20a are not driven. However, other torque-transmission arrangements can be used in other implementations with any quantity and combination of driven and non-driven wheels, any number of wheels being driven by a single prime mover, and any number of prime movers.

The lawn mower 12 includes a power source 24 (Fig. 2), such as a battery, for powering the at least one prime mover 16 such that the lawn mower 12 can perform a lawn mowing operation in a cordless fashion. The power source 24 may include a lithium-ion battery, and/or other battery chemistries. The power source 24 may be removable from the lawn mower 12. In other implementations, the at least one prime mover 16 may be powered by other power sources, such as solar panels, fuel cells, compressed fluid, fuel, or the like. The lawn mower 12 includes a battery charging contact 26 for receiving a charge from an external power source (not shown) for charging the power source 24.

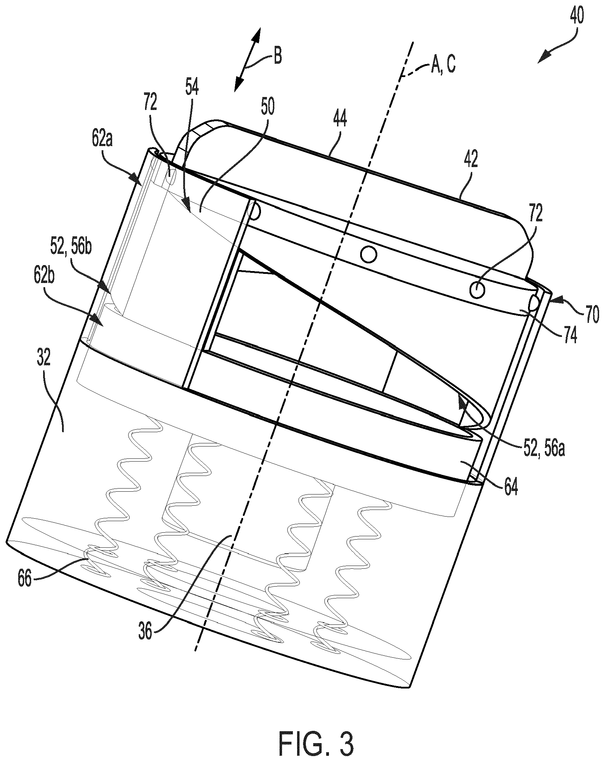

The lawn mower 12 includes a cutting module 30 (some of which is illustrated in Fig. 2 and some of which is illustrated in Figs. 3-8, as will be described below), which may be supported by the deck 14. As best illustrated in Fig. 3, the cutting module 30 includes a cutting module mount 32 fixed with respect to the deck 14 or formed as part of the deck 14. With reference to Fig. 2, the cutting module 30 also includes a blade 34 and a motor 36 configured to move the blade 34 about an axis of rotation A. The motor 36 may be referred to as the blade motor 36. In the illustrated implementation, the blade 34 is a lawn mower blade; however, in other implementations, the blade 34 includes a reciprocal trimming unit (not shown) having linearly reciprocating trimming blades, and the motor 36 drives the trimming blades of the trimming unit to move reciprocally (i.e., in opposing clockwise and counter-clockwise directions about the axis of rotation A). In yet other implementations, the blade 34 includes a string (not shown), as in a string trimmer, and the motor 36 drives the string about the axis of rotation A. In yet other implementations, the blade 34 includes a roller blade (not shown), such as a reel blade or squirrel cage blade, and the motor 36 drives the roller blade to roll or rotate about an axis that is generally parallel with the support surface (e.g., generally horizontal). In yet other implementations, the blade 34 includes an auger (not shown), such as snow blower auger, and the motor 36 drives the auger to roll or rotate about an axis that is generally parallel with the support surface (e.g., generally horizontal). In yet other implementations, the blade 34 includes a fan (not shown), such as a blower fan, and the motor 36 drives the fan in rotation. Other types of blades are also possible. Furthermore, other types of driven implements are also possible, including the blades described above as well as other non-blade implements that are driven by the motor 36.

The motor 36 includes a rotatable drive shaft 38 (Fig. 2) operably coupled to the blade 34. In the illustrated implementation, the drive shaft 38 is disposed coaxially with the axis of rotation A. In other implementations, the drive shaft 38 may be disposed parallel with (e.g., offset from) or transverse to the axis of rotation A. The axis of rotation A defines an axial direction B. The axial direction B is typically a vertical direction with respect to the support surface on which the lawn mower 12 rides, e.g., up and down with respect to gravity, when the lawn mower 12 is in use. However, in certain implementations, the axis of rotation A may be tilted relative to the vertical direction, for example by 1 to 10 degrees, preferably by 3 to 8 degrees, and more preferably by 5 to 6 degrees. In certain implementations, the axis of rotation A may be tilted forward in the travelling direction relative to the vertical direction. Said tilt may be achieved by tilting the motor 36, or tilting the blade 34, or tilting the blade 34 and the motor 36.

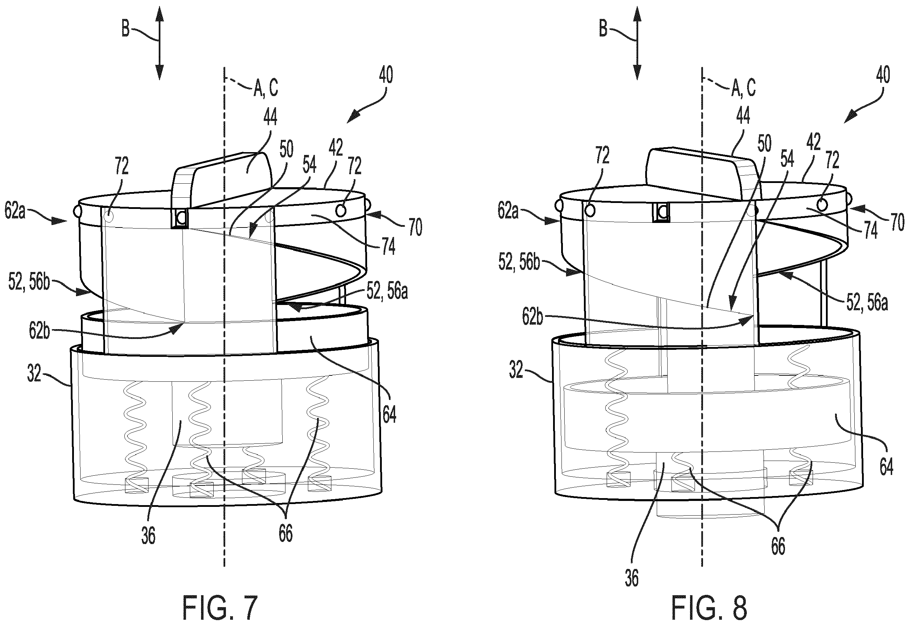

The cutting module 30 also includes a height adjustment mechanism 40 (Figs. 3-8) for moving the blade 34 at least partially up and down in the axial direction B ("at least partially" meaning the blade 34 has at least a component of movement in said direction, which may be vertical or tilted, but may or may not additionally move in other directions). The height adjustment mechanism 40 includes a manual actuator 42 configured to move in response to manual actuation by an operator. The manual actuator 42 is accessible to the operator's hand from outside the lawn mower 12 for manual engagement, as illustrated in Fig. 1. For example, the manual actuator 42 includes a grip surface 44, such as a tab in the illustrated implementation, that is disposed externally on the lawn mower 12 as illustrated in Fig. 1. In the illustrated implementation, the manual actuator 42 is rotatable about the axis of rotation A of the blade. However, in other implementations, the manual actuator 42 may be rotatable about a different axis, which may be parallel to or transverse to the axis of rotation A of the blade. The blade 34 is configured to move in the axial direction B in response to movement of the manual actuator 42, as will be described in greater detail below. In the illustrated implementation, the blade 34 is movable about 1.57 inches (40 mm) in the axial direction B between a raised position (Fig. 7) in which the blade 34 is fully raised and a lowered position (Fig. 8) in which the blade 34 is fully lowered. The blade 34 is movable at least 1.5 inches (38.1 mm) in the axial direction B in some implementations, and may be movable at least 1.57 inches (40 mm), and may be movable more than 1.57 inches (40 mm) in the axial direction B in some implementations. In certain implementations, the cutting height (height from blade to ground) changes between around 1.96 inches (50mm) and 3.54 inches (90mm). In certain implementations, the cutting height changes between 0.78 inches (20mm) and 2.36 inches (60mm).

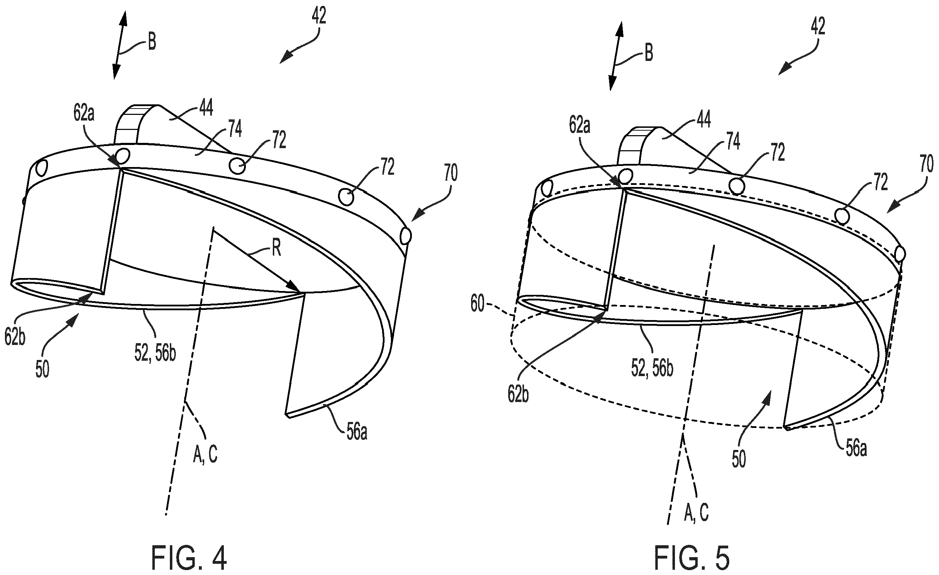

The manual actuator 42 is operably coupled to a cam interface 50 (see Figs. 3-5). The cam interface 50 includes a cam surface 52 and a follower surface 54. In the illustrated implementation, the cam surface 52 is rotatable and the follower surface 54 translates. The cam interface 50 is at least partially helical. In the illustrated implementation, the cam surface 52 includes two helical surfaces 56a, 56b, each extending 180 degrees about the axis of rotation A and having the same cam profile. In other implementations, the cam surface 52 may have other configurations, such as one helical surface, or three or more helical surfaces. The cam surface 52 has a pitch angle of about 114.3 degrees per inch (with "about" meaning +/- 10 degrees per inch) (the pitch angle is about 4.5 degrees per mm). In some implementations, the pitch angle may be between about 50.8 degrees per inch and about 152.4 degrees per inch (between about 2 degrees per mm and about 6 degrees per mm). The cam surface 52 has a radius R (from the central axis C as shown in Fig. 4) of about 2.36 inches (with "about" meaning +/- 0.2 inches) (the radius R is about 60 mm). In other implementations, the radius R may be between about 0.78 inches and about 9.9 inches (about 20mm - 250mm), or between about 1.1 inches and about 7.9 inches (about 30mm-200mm), or between about 1.5 inches and about 5.9 inches (about 40mm-150mm), or between about 1.9 inches and about 3.9 inches (about 50mm-100mm), or between about 2.3 inches and about 3.2 inches (about 60mm-80mm). For example, the cam interface 50 is configured such that the blade 34 is displaced in the axial direction B about 1.5 inches (38 mm) or more in response to an angular range of 180 degrees of rotation of the manual actuator 42. In other implementations, the blade 34 may be displaced in the axial direction B about 1.57 inches (40 mm) or more in response to 180 degrees of rotation of the manual actuator 42. In other implementations, the cam surface 52 may be translatable rather than rotatable.

With reference to Figs. 4-5, the cam interface 50 is disposed within a cylindrical volume 60 (illustrated in Figs. 2, 4, and 5) defined circumferentially by the cam interface 50 (e.g., by the helical surfaces 56a, 56b) and bounded axially (e.g., in the axial direction B) by upper and lower distal ends 62a, 62b of the cam interface 50. In the illustrated implementation, the axis of rotation A of the blade intersects the cylindrical volume 60. In the illustrated implementation, the cylindrical volume 60 is centered with respect to the axis of rotation A, e.g., the cylindrical volume 60 defines a central axis C, and the central axis C is coaxial with the axis of rotation A of the blade. Thus, in the illustrated implementation the central axis C also defines the axial direction B. In other implementations, the axis of rotation A may be disposed in other locations that intersect the cylindrical volume 60, e.g., parallel to the central axis C or transverse to the central axis C (e.g., if the axis of rotation A is tilted as described above). In yet other implementations, the axis of rotation A may be transverse to the central axis C and need not intersect the cylindrical volume 60. In the illustrated implementation, the axis of rotation A of the blade intersects the manual actuator 42 and, more specifically, is coaxial with the manual actuator 42. Furthermore, the manual actuator 42 is rotatable about the central axis C, and therefore also about the axis of rotation A of the blade. However, in other implementations, other configurations of the manual actuator 42 are possible. For example, the central axis C need not be coaxial with the axis of rotation A of the blade and may be parallel to (offset) or transverse to the axis of rotation A of the blade in other implementations.

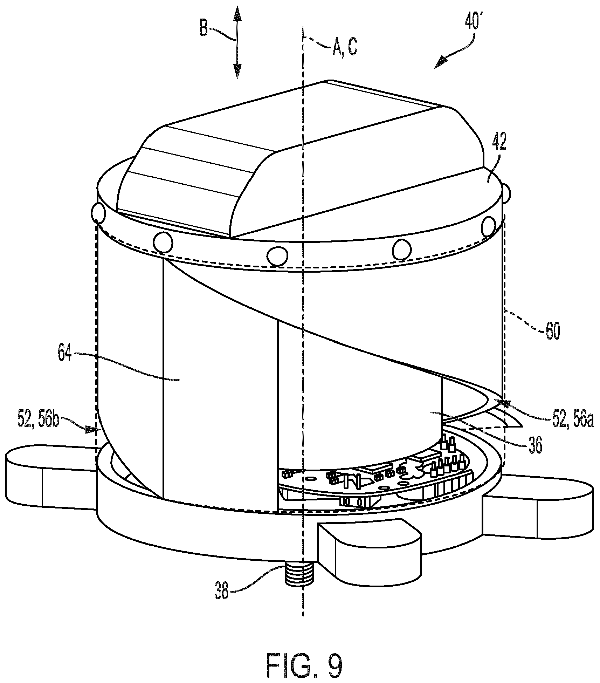

Furthermore, in the illustrated implementation of Fig. 9, the motor 36 is disposed at least partially within the cylindrical volume 60. For example, the motor 36 may be disposed partially within the cylindrical volume 60, mostly within the cylindrical volume 60, or completely within the cylindrical volume 60. Placement of the motor 36 at least partially within the cylindrical volume 60 provides a more compact height adjustment mechanism 40', especially in the axial direction B. All other aspects of the height adjustment mechanism 40' illustrated in Fig. 9 are the same as those described herein with respect to Figs. 1-8, and reference is made to the description of the height adjustment mechanism 40 in Figs. 1-8 herein and need not be repeated.

Returning to the implementation of Figs. 1-8, the height adjustment mechanism 40 includes a motor mount 64 (Figs. 3, 7, and 8) configured to support the motor 36 in a generally fixed relation thereto, which may include a degree of movement or damping to adapt to vibrations, external force, etc., or may be rigidly fixed to the height adjustment mechanism 40. The motor mount 64 is axially slidable, in the axial direction B, with respect to the cutting module mount 32. The motor mount 64 may be fixed against rotational movement with respect to the deck 14 such that the motor mount 64 is configured to translate in the axial direction B without rotation with respect to the deck 14. The motor mount 64 is movable between the raised position (Fig. 7) in which the blade 34 is fully raised and the lowered position (Fig. 8) in which the blade 34 is fully lowered. In the illustrated implementation, the motor mount 64 also supports the drive shaft 38 and the blade 34 in fixed relation therewith such that the motor mount 64, the motor 36, the drive shaft 38, and the blade 34 move together as one unit in the axial direction B in response to movement of the manual actuator 42.

In the illustrated implementation, the motor mount 64 includes at least a portion of the cam interface 50. The motor mount 64 is operatively coupled to the follower surface 54. As illustrated, the motor mount 64 includes the follower surface 54 in fixed relation thereto, such that the motor mount 64 and the follower surface 54 translate together as one unit. Furthermore, the manual actuator 42 is rotatable and also includes at least a portion of the cam interface 50. The manual actuator 42 is operatively coupled to the cam surface 52. As illustrated, the manual actuator 42 includes the cam surface 52 in fixed relation thereto, such that the manual actuator 42 and the cam surface 52 rotate together as one unit. Thus, in the illustrated implementation, the cam interface 50 includes (i.e., is at least partially defined by) direct engagement between the manual actuator 42 and the motor mount 64. However, in other implementations, the cam interface 50 is disposed operatively between the manual actuator 42 and the motor mount 64 such that movement of the manual actuator 42 imparts movement to the motor mount 64 with respect to the deck 14 directly or indirectly. In other implementations, the manual actuator 42 may be configured to move a blade mount (not shown, but essentially the same as the motor mount 64) such that the blade 34 is configured to move in the axial direction B with respect to the drive shaft 38 (which remains stationary with respect to the deck 14) in response to movement of the manual actuator 42 without the motor 36 moving with respect to the deck 14.

The height adjustment mechanism 40 also includes one or more biasing members 66 (Figs. 3, 7, and 8), such as coil springs (as illustrated), one or more leaf springs, one or more cup springs, or the like, for biasing the motor mount 64 upwards in the axial direction B (away from the support surface). The one or more biasing members 66 restore the motor mount 64 to its highest position (the raised position) shown in Fig. 7. Specifically, the one or more biasing members 66 are disposed between the cutting module mount 32 and the motor mount 64. In the illustrated implementation, the one or more biasing members 66 are each in direct engagement with the cutting module mount 32 and the motor mount 64; however, indirect engagement may be employed in other implementations. The one or more biasing members 66 allow the cutting module 30 to float with respect to the deck 14, and may therefore allow for movement of the cutting module 30 in more than just the axial direction B.

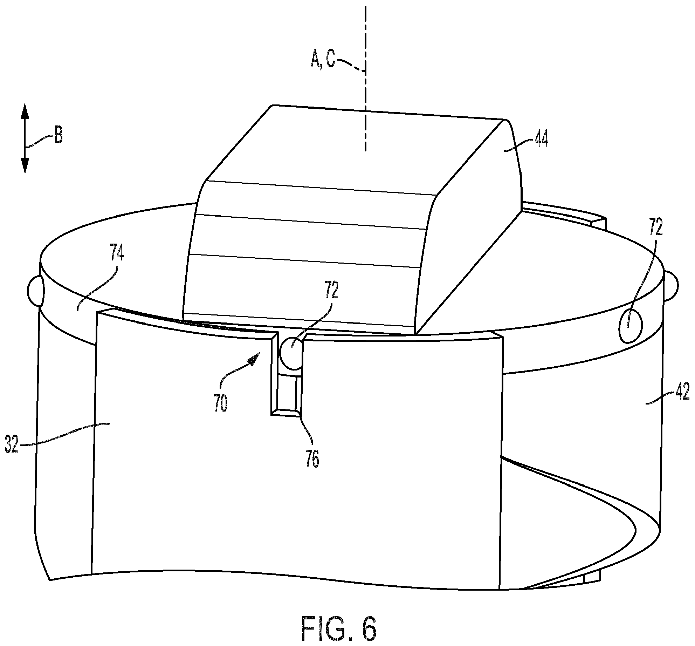

With reference to Figs. 3 and 6, the height adjustment mechanism 40 also includes a detent mechanism 70 operatively coupled to the manual actuator 42 for producing audible and/or tactile feedback and to retain the manual actuator 42 in a plurality of discrete angular positions. Markings (not shown), such as height indicators, may be provided at predetermined intervals of rotation of the manual actuator 42 corresponding to different cutting heights. The manual actuator 42 is also retained at a fixed height (in the axial direction B) with respect to the deck 14 as the manual actuator 42 rotates. In the illustrated implementation, the detent mechanism 70 includes spring-biased balls 72 disposed about a circumference of the manual actuator 42 and extending radially from an outer circumferential surface 74 of the manual actuator 42. The spring-biased balls 72 are biased radially outwards from the outer circumferential surface 74 towards the cutting module mount 32. The illustrated detent mechanism 70 includes ten spring-biased balls 72 arranged at 36-degree intervals around the outer circumferential surface 74; however, any number and spacing of one or more spring-biased balls 72 (or other detent mechanisms) may be employed in other implementations. The detent mechanism 70 engages the cutting module mount 32 and registers in an aperture 76 on the cutting module mount 32. The aperture 76 on the cutting module mount 32 may include a notch (as illustrated), a recess, a groove, a pocket, or the like. In the illustrated implementation, the cutting module mount 32 includes two apertures 76 that are diametrically opposed; however, in other implementations the cutting module mount 32 may include any number of one or more apertures 76 arranged in any suitable fashion for engagement with the detent mechanism 70. In yet other implementations, the detent mechanism 70 may be disposed on the cutting module mount 32 and the one or more apertures 76 may be disposed on the manual actuator 42.

The cutting module 30 also includes a guard 80 (Fig. 2) covering a portion of the blade 34. In the illustrated implementation, the guard 80 is disposed below the blade 34 in the axial direction B, i.e., closer to the support surface than the blade 34. However, in other implementations, the guard 80 may have any suitable configuration for covering a portion of the blade 34 and may cover portions of the blade 34 on a bottom of the blade 34, around circumferential sides of the blade 34, and/or over the blade 34, in any combination. In the illustrated implementation, the guard 80 is configured to move up and down with blade 34 in the axial direction B, in fixed relation therewith, in response to movement of the manual actuator 42. However, in other implementations, the guard 80 may remain fixed with respect to the deck 14 as the blade 34 is adjusted.

The cutting module 30 is modular and can be removed from the lawn mower 12 as a unit and replaced as a unit.

With reference to Figs. 1 and 2, the charging station 48 includes a docking pad 82 and a battery charging terminal 84. The docking pad 82 defines a generally planar surface 86, with "generally planar surface" being defined as providing enough of a portion of a planar surface, i.e., comprised of a single continuous surface or a plurality of separated (discontinuous) surfaces, for the lawn mower 12 to drive up onto and be supported by during a charging operation. The battery charging terminal 84 is configured to engage with the battery charging contact 26 on the lawn mower 12 to provide an electrical connection therebetween for charging the power source 24 (e.g., battery).

In operation, blade height adjustment may be achieved manually by an operator. The operator engages the grip surface 44 of the manual actuator 42 and moves the manual actuator 42 (e.g., rotates the manual actuator 42 in the illustrated implementation). At predefined angular intervals, as defined by the detent mechanism 70, the operator hears and/or feels feedback from the manual actuator 42. The manual actuator 42 may be held in one of the discrete angular positions by the detent mechanism 70 to retain the blade 34 at a corresponding height. For each angular interval of rotation of 36 degrees, the blade height changes by about 0.314 inches (8 mm) (or more in some implementations). The blade height changes by at least 1.5 inches (38 mm) or more in response to the manual actuator 42 being rotated 180 degrees. The operator rotates the manual actuator 42 in a first direction (e.g., clockwise) to lower the blade 34 and in a second direction (e.g., counterclockwise) to raise the blade 34. The biasing members 66 provide a force to return the blade 34 towards the raised position when the manual actuator 42 is rotated in the second direction.

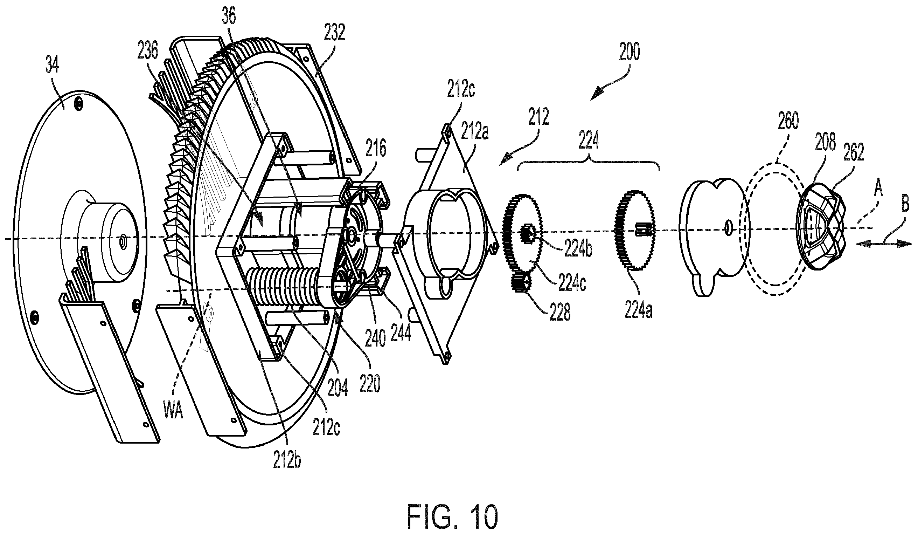

FIGS. 10-14 relate to an alternate embodiment of a height adjustment mechanism 200. The height adjustment mechanism 200 functions similarly to the height adjustment mechanism 40 and therefore only the differences will be discussed in detail herein. The height adjustment mechanism 200 includes a bracket 212 fixedly coupled to the deck 14, a mount 216 movably coupled to the bracket 212, a manual actuator 208, and a worm shaft 204 extending between and configured to transmit force between the bracket 212 and the mount 216. As shown in FIG. 10, the manual actuator 208 includes a knob that is rotatable with respect to the deck 14 upon receipt of a manual input from the user (e.g., applying torque thereto). While the illustrated actuator 208 is a rotatable knob, it is understood that other forms of manual actuator 208, such as sliders, buttons, and the like, may also be used.

The bracket 212 of the height adjustment mechanism 200 includes an upper plate 212a, a lower plate 212b axially spaced from the upper plate 212a along the axial direction B, and a plurality of channels 244 extending between the upper plate 212a and the lower plate 212b. The bracket 212 also at least partially encloses a void or volume 236 between the top plate 212a, the bottom plate 212b, and channels 244.

The channels 244 of the bracket 212 extend generally parallel to the axis of rotation A and are configured to act as guides for the mount 216. More specifically, the bracket 212 includes three channels 244 each positioned along the exterior of the plates 212a, 212b at 90-degree intervals from each other. In the illustrated embodiment, the channels 244 are each generally C-shaped having an open end that faces inwardly toward the axis of rotation A. During use, the channels 244 are sized and shaped to receive a portion (e.g., a corresponding projection 240) of the mount 216 therein. While the illustrated channels are C-shaped, it is understood that other shapes, geometries, and orientations channels 244 may be used.

In some embodiments, the channels 244 of the bracket 212 may also include a dampening material applied thereto to dampen or otherwise minimize the transmission of vibrations between the mount 216 and the bracket 212. More specifically, the interface between the channels 244 and the projection 240 of the mount 216 may be lined with a foam, rubber, or other dampening materials. In still other embodiments, the projections 240 may be coated or even formed from a dampening material to minimize the transmission of vibrations between the mount and the bracket 212. For example, the projections 240 may be formed from or coated in rubber, foam, and the like. In still other embodiments, a spring or other biasing member may be present that extends between and transmits force between the projections 240 of the mount 216 and the channels 244. In such embodiments, the springs or other biasing members may be configured to minimize the amount of vibrations that are transmitted between the mount 216 and the bracket 212. For example, each projection 240 may define a groove into which a spring is positioned. The spring, in turn, then engages the interior of the channel 244.

With continued reference to Fig. 10, the upper end 212a of the bracket 212 includes a plurality of fastener receiving holes 212c. When assembled, a respective fastener (not shown) may pass through each hole 212c to fixedly secure the upper end 212a of the bracket 212 to the deck 14 (see FIG. 12).

As shown in FIG. 12, the worm shaft 204 of the height adjustment mechanism 200 extends between and is supported by both the top and bottom plates 212a, 212b for rotation with respect thereto about a worm axis C. More specifically, the worn shaft 204 includes an elongated threaded shaft forming a helical threaded surface 204a on the exterior thereof. In the illustrated embodiment, the worm axis C is parallel to and offset from the axis of rotation A. In some embodiments, the worm shaft 204 may include a thread pitch of about 7mm/round, 8mm/round, 9mm/round, 10mm/round, 11mm/round, 12mm/round, and 13mm/round (with "about" meaning +/- 0.5 mm/round). In still other embodiments, the worm shaft 204 may include a thread pitch between 9mm/round to 1 1 mm/round, and 8mm/round to 12mm/round

With continued reference to FIG. 12, the height adjustment mechanism 200 includes a bearing 256 positioned and accommodating rotation between the worm shaft 204 and the bottom plate 212b of the bracket 212. More specifically, the worm shaft 204 defines a blind bore 252 in one end thereof while the height adjustment mechanism 200 includes a bearing standoff 248 on which the bearing 256 is mounted. In the illustrated embodiment, the bearing standoff 248 and the blind bore 252 each extend along the axial direction B towards the driven gear 228. In other embodiments, bearings 256 may be present at both ends of the worm shaft 204.

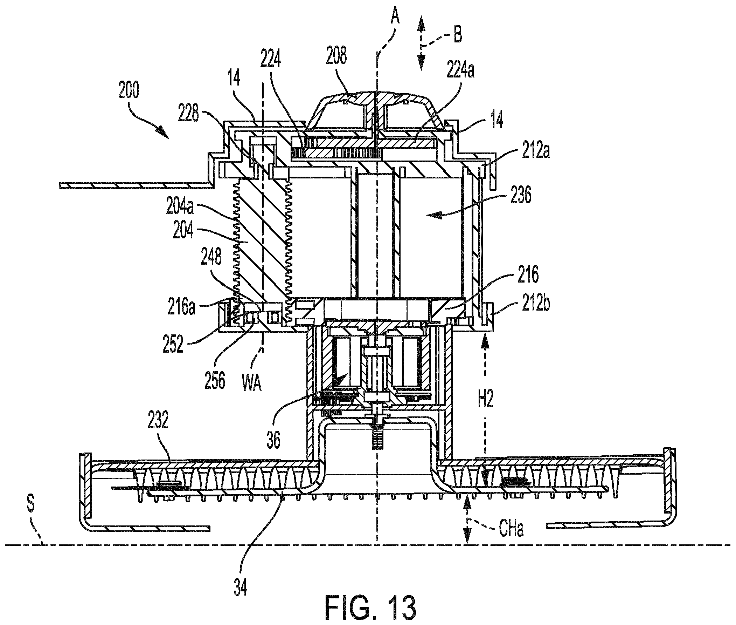

As shown in FIG. 11, the mount 216 of the height adjustment mechanism 200 includes a plate-like body 218 having a plurality of projections 240 each extending outwardly therefrom. During use, the mount 216 is configured to move continuously in the axial direction B with respect to the bracket 212 between a first position (see FIG. 12), in which the mount 216 is positioned proximate the first plate 212a of the bracket 212, and a second position (see FIG. 13), in which the mount 216 is positioned proximate the second plate 212b. More specifically, the mount 216 is configured to be supported by the bracket 212 such that the body 218 remains substantially normal to the axis A (e.g., normal to the channels 244 and worm axis C) as it moves between the first position and the second position.

In the illustrated embodiment, the mount 216 includes three projections 240 each extending outwardly from the body 218 at 90-degree intervals from each other and substantially corresponding to the location of the channels 244 of the bracket 212. When assembled, each projection 240 is sized to be at least partially received within a corresponding channel 244 of the bracket 212 such that the projection 240 is restricted from moving laterally in the channel but can slide along the length of the channel 244 in the axial direction B. In the illustrated embodiment, the projections 240 are generally T-shaped to correspond with the size and shape of the open end of the channels 244. In some embodiments, a spring or other biasing member may be present to apply a biasing force against the mount 216 during operation. In such embodiments, the biasing member may act against one or more of the projections 240. Still further, the projections 240 may include a slot or guide to engage the biasing member and help minimize any deformation during operation.

As shown in FIG. 11, the mount 216 also includes a threaded interface 220 configured to threadably engage the worm shaft 204. The threaded interface 220 includes an internal threaded surface 216a configured to engage the external threaded surface 204a of the worm shaft 204 such that rotation of the worm shaft 204 about the worm axis C causes the mount 216 to move axially along the length of the shaft 204. In the illustrated embodiment, the threaded interface 220 is a complete 360-degree interface. More specifically, rotating the worm shaft 204 in a first direction about the worm axis C causes the mount 216 to travel axially toward the first position (e.g., away from the second plate 212b and toward the first plate 212a) while rotating the worm shaft 204 in a second direction opposite the first direction causes the mount 216 to travel axially toward the second position (e.g., away from the first plate 212a and toward the second plate 212b).

The mount 216 is also configured to serve as a mounting location for the cutting module 30. More specifically, the cutting module mount 232 is fixedly coupled to the mount 216 via one or more fasteners so that the module mount 232 and the mount 216 move together as a unit. Since the motor 36 is fixedly coupled to the module mount 232, the motor 36 also moves together with the mount 216 and the module mount 232.

During use, the mount 216 and the cutting module 30 are together continuously movable with respect to the bracket 212 in the axial direction B between a first or raised position (see FIG. 12), and a second or lowered position (see FIG. 13). More specifically, when the mount 216 and cutting module 30 are in the first position, the mount 216 is in the first position causing the blade 34 to be spaced a first vertical distance H1 from the bracket 212 defining a first cutting height CHa. In contrast, when the mount 216 and the cutting module 30 are in the second or lowered position the mount 216 is positioned in the second position causing the blade 34 to be spaced a second vertical distance H2 from the from 212 that is greater than the first vertical distance H1 defining a second cutting height CHb that is greater than the first cutting height CHa. In some embodiments, the difference between the first cutting height CHa and the second cutting height CHb is approximately 65mm (with "approximately" being ±5mm). in other embodiments, the difference between the first cutting height CHa and the second cutting height CHb is approximately 50mm, 55mm, 60mm, 70mm, 75mm, and 80mm. Furthermore, the blade motor 36 is mounted to the module mount 232 such that the motor 36 is completely positioned within the void 236 when the mechanism 200 is in the raised position and is at least partially positioned below or outside the void 236 in the lowered position.

As best illustrated in Fig. 10, the alternate height adjustment mechanism 200 also includes a transmission mechanism 224 extending between and configured to transmit torque between the manual actuator 208 and the worm shaft 204. More specifically, the transmission mechanism 224 is configured to transmit torque while decreasing the mechanical advantage between the manual actuator 208 and the worm shaft 204 such that one rotation of the manual actuator 208 by the user results in multiple rotations of the worm shaft 204. In some embodiments, the mechanical advantage between the manual actuator 208 and the worm shaft 204 may be such that one rotation of the manual actuator 208 causes the worm shaft 204 to rotate the necessary number of times to cause the mount 216 to move between the first position and the second position. In other embodiments, the mechanical advantage may be such that some multiple of rotations of the manual actuator 208 causes the worm shaft 204 to rotate the necessary number of times to cause the mount 216 to move between the first position and the second position. In still other embodiments, the mechanical advantage may be such that approximately 1/3, 1/2, 5/8, 2/3, 3/4, and 7/8 of a rotation of the manual actuator 208 causes the worm shaft 204 to rotate the necessary number of times to cause the mount 216 to move between the first position and the second position (with "approximately" meaning ± 1/16 of a revolution). In still other embodiments, the mechanical advantage may be such that between 1/2 to 1, and 5/8 to 7/8 of a rotation of the manual actuator 208 causes the worm shaft 204 to rotate the necessary number of times to cause the mount 216 to move between the first position and the second position.

In still other embodiments, the gear train 224 may provide an overall gear ratio of approximately 8.5:1 such that one rotation of the manual actuator 208 will result in 8.5 rotations of the worm shaft 204 (with "approximately" meaning ±0.5 rotations of the worm shaft 204). In other embodiments, the overall gear ratio of the gear train 224 may include 5:1, 6:1, 7:1, 8:1, 9: 1, and 10:1. In still other embodiments, the gear train 224 may provide an overall gear ratio between 8:1 to 9:1, and 7:1 to 10:1.

In still other embodiments, the gear train 224 and worm shaft 204, together, are configured such that each degree of rotation of the manual actuator 208 causes the mount 216 to travel approximately 0.24 mm in the axial direction B. In other embodiments, the gear train 224 and worm shaft 204, together, are configured such that each degree of rotation of the manual actuator 208 causes the mount 216 to travel approximately 0.1mm, 0.15mm, 0.2mm, 0.25mm, 0.3mm, 0.35mm, and 0.4mm in the axial direction B.

In illustrated transmission mechanism 224 is a gear train 224 including a first gear 224a coupled to and rotatable together with the manual actuator 208, a second gear 224b with a different number of teeth than the first gear 224a, a third gear 224c rotatable together with the second gear 224b, and a driven gear 228 coupled to and rotatable together with the worm shaft 204. Together, the first, second, third, and spur gears 224a, 224b, 224c, 228 form a gear train that decreases the mechanical advantage between the manual actuator 208 and the worm shaft 204 such that one rotation of the manual actuator 208 by the user results in multiple rotations of the worm shaft 204. While the illustrated embodiment includes four gears forming a gear train, it is understood that in other embodiments more or fewer gears may be used.

In the illustrated embodiment, the gears 224a-224c of the gear train 224 are each spur gears, and the driven gear 228 is also a spur gear. It is envisioned that any number of the gears 224a-224c and the drive gear 228 may be other types of gears, for example, bevel gears. In the illustrated embodiment, each of the gears 224a-224c as well as the driven gear 228 rotate about an axis parallel to the rotation axis A. Furthermore, while the illustrated transmission mechanism 224 includes a series of gears to convey torque and produce the desired mechanical advantage, it is understood that in other embodiments other forms of conveyance could be used such as but not limited to pulleys and belts, cammed surfaces, and the like.

Returning to FIGS. 1 and 10, indicia 260 is provided on an outer surface 14a of the tool 12. More specifically, the indicia 260 is configured to encircle the manual actuator 208 and provide visual indications of the current vertical position of the mount 216 relative to the bracket 212 and/or the support surface S (e.g., the cutting heigh CH). In the illustrated embodiment, the indicia 260 includes a series of graduations formed or otherwise printed on the outer surface 14a or the tool 12, with each graduation representing the rotational orientation of the manual actuator 208 for a given vertical position of the blade 34. During use, a corresponding indicia 262 on the manual actuator 208 will point to or otherwise align with a corresponding graduation of the indicia 260 to provide a visual indication to the user of the current cutting height. In the illustrated embodiment, the indicia 260 may include printed indicia and/or symbols molded into the tool 12 itself. However, in other embodiments the indica may include grooves, lights, pixels on a screen, and the like.

To increase the cutting height CH of the blade 34 of the tool 12, the user applies a manual actuation force to the manual actuator 208. More specifically, the user applies a torque to the manual actuator 208 in a first direction causing it to rotate with respect to the deck 14. The torque applied by the user is transmitted to the worm shaft 204 via the gear train 224 causing the worm gear 204 to rotate with respect to the bracket 212 in a first direction. As discussed above, the rotation of the worm gear 204 in the first direction causes the mount 216 and cutting module 30 to move together as a unit toward the first plate 212a. This motion, in turn, causes the distance H1 between the blade 34 and the bracket 212 to decrease and the cutting height CH to increase.

The user continues to rotate the manual actuator 208, causing the cutting height CH to increase, until the indicia 262 on the actuator 208 aligns with the indicia 260 on the outer surface 14a corresponding with the desired cutting height. Once aligned, the user stops applying torque to the manual actuator 208 causing the blade 34 to become locked vertically relative to the deck 14 at the indicated cutting height CH.

To reduce the cutting height CH of the blade 34 of the tool 12, the user applies a torque to the manual actuator 208 in a second direction opposite the first direction. The torque, in turn, causes the manual actuator 208 to rotate with respect to the deck 14 where it is transmitted to the worm shaft 204 via the gear train 224 causing the worm gear 204 to rotate with respect to the bracket 212 in a second direction opposite the first direction. As discussed above, the rotation of the worm gear 204 in the second direction causes the mount 216 and cutting module 30 to move together as a unit toward the second plate 212b. This motion, in turn, causes the distance H2 between the blade 34 and the bracket 212 to increase and the cutting height CH to decrease.

The user continues to rotate the manual actuator 208, causing the cutting height CH to decrease, until the indicia 262 on the actuator 208 aligns with the indicia 260 on the outer surface 14a corresponding to the desired cutting height CH. Once aligned, the user stops applying torque to the manual actuator 208 cutting the blade 34 to become locked vertically relative to the deck 14 at the indicated cutting height CH. In still other embodiments, the top and bottom plates 212a, 212b may serve as limiters to physically stop the motion of the mount 216.

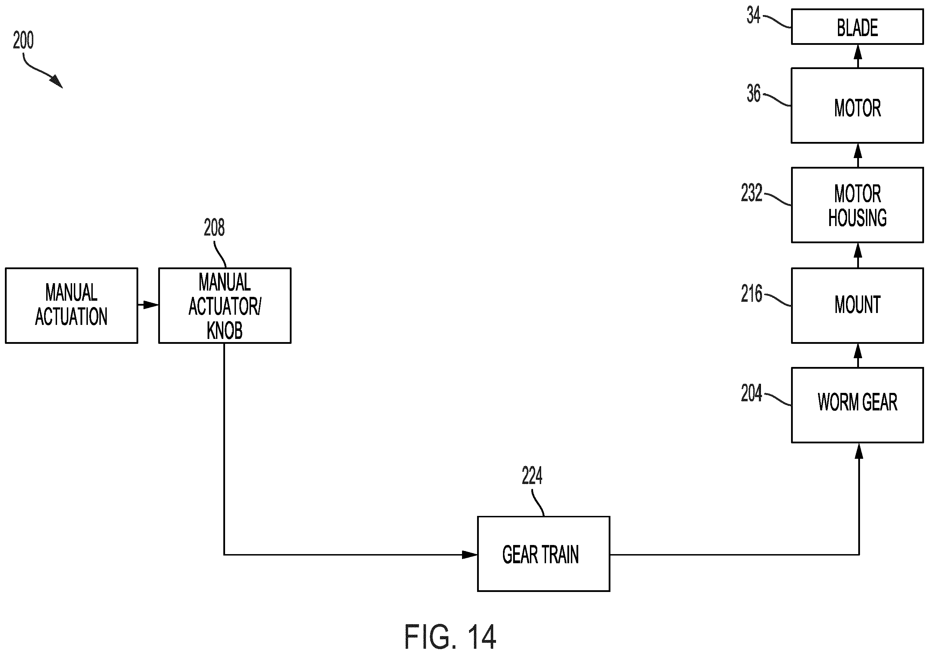

Fig. 14 provides a simplified schematic illustrating the components of the height adjustment mechanism 200. The height adjustment mechanism 200 is mechanical in nature. Manual actuation provided by a user rotates or otherwise provides force to the manual actuator (i.e., knob) 208. This force is passed to the gear train 224. The gear train 224 ultimately transmits the force to the worm gear 204, which, through the threaded interface 220. Moves the mount 216, motor housing 232, motor 36, and blade 34.

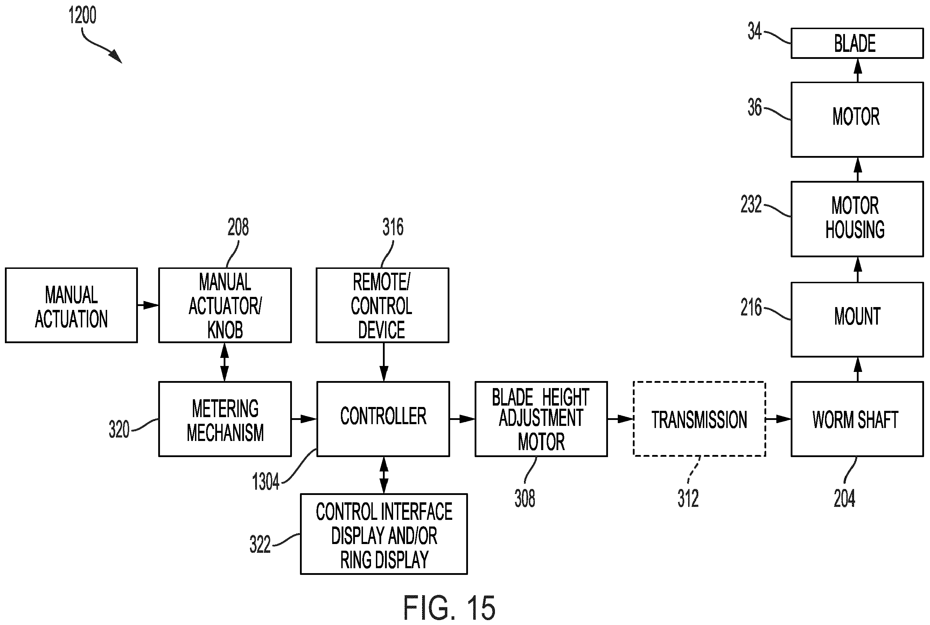

FIG. 15 illustrates another embodiment of the height adjustment mechanism 1200. The height adjustment mechanism 1200 is substantially similar to the height adjustment mechanism 200 so only the differences will be described in detail herein. The height adjustment mechanism 1200 includes a blade height adjustment motor 308. The blade height adjustment motor 308 is in operable communication with and configured to apply an adjustment vector to the worm shaft 204 in response to receiving a control signal from the controller 1304 (described below). An adjustment vector may include, for example, a direction of rotation and an angular magnitude. In other words, the blade height adjustment motor 308 is configured to provide mechanized input torque to rotate the worm shaft 204 about the worm axis C and ultimately raise or lower the blade 34 a predetermined amount as described above. During use, the blade height adjustment motor 308 is configured to receive signals from the controller 1304 representative of the desired adjustment vector to be applied to the worm shaft 204 and apply torque to the worm shaft 204 in the manner prescribed. In some embodiments, the height adjustment mechanism 1200 may include a transmission 312 positioned between and in connection with the blade height adjustment motor 308 and the worm shaft 204.

With continued reference to FIG. 15, the garden tool system 1200 also includes a remote-control device 316. The remote-control device 316 is in electrical communication with the controller 1304. Communication between the remote-control device 316 and the controller 1304 may be held over Bluetooth, Wi-Fi, cellular or other known wireless data transfer means. The remote-control device 316 may be, for example, a user's cell phone, laptop, computer, smart watch, or other device. The remote-control device 316 is configured to run an application to provide a user input to the controller 304. More specifically, the user input to the controller 304 may include, but is not limited, a target cutting height, a series of target cutting heights, a series of target cutting heights associated with geo-location data, a desired adjustment vector, a series of adjustment vectors, geo-location data, desired operating conditions, and the like.

Fig. 15 further illustrates a metering mechanism 320. The metering mechanism 320 is configured to sense the position and/or movement or rotation of the manual actuator 208 and output a signal to the controller 1304 representative of the same. More specifically, the metering mechanism 320 is configured to sense the position and/or movement or rotation of the manual actuator 208 with respect to the deck 14. In the illustrated embodiment, the metering mechanism 320 is a potentiometer however in other embodiments different forms of sensor may be used such as but not limited to position sensors, rotary position sensors, Hall-effect sensors, and the like may be used. Multiple metering mechanisms 320, and multiple types of metering mechanisms 320 may also be used.

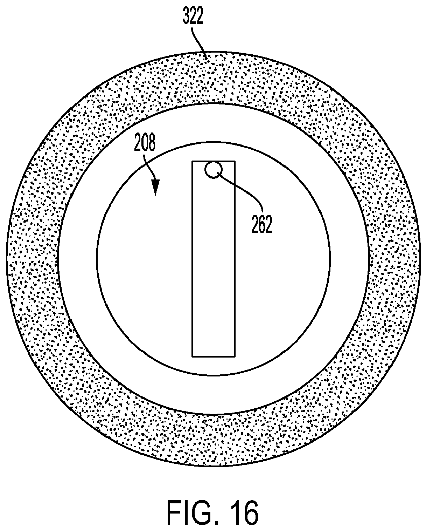

With reference to FIG. 16, the garden tool 12 also includes a control interface 322 configured to receive and output information to the user. More specifically, the control interface 322 of the illustrated tool 12 includes a screen and/or buttons mounted to the tool 12 into which the user can input information (e.g., a desired cutting height CH) and/or display current operation conditions (e.g., the current cutting height CH, battery level, power or operation settings, and the like). The interface 322 may include a single unit or include multiple elements mounted to the tool 12 in different locations.

In the illustrated embodiment, the display 322 includes an annular screen or plurality of LEDs encircling the manual actuator 208 (see Fig. 16). During use, the display 322 is configured to display a series of graduations and/or indicia indicating the current cutting height of the blade 34 relative to the current rotational orientation of the manual actuator 208. More specifically, in instances where the cutting height CH of the blade 34 is adjusted using inputs other than the manual actuator 208 itself, the current cutting height CH may change while the orientation of the actuator 208 does not. As such, the display 322 may be configured to alter the image surrounding the actuator 208 so that the indicated cutting height CH is displayed. This can be done by either adjusting the scale of graduations so that the desired graduation is now displayed in the proper location with respect to the actuator 208 and/or displaying a numeric value. By doing so, the manual actuator 208 can be mechanically independent from the worm shaft 204 but still visually convey the proper information to the user.

The height adjustment mechanism 1200 also includes a controller 1304. The controller 1304 is in operable communication with at least the remote-control device 316, the metering mechanism 320, the control interface 322, and the blade height adjustment motor 308. During use, the controller 1304 is configured to receive a stream of signals from the metering mechanism 320, remote control device 316, and the control interface 322, process the signals using one or more algorithms, and output signals to the blade height adjustment motor 308 based at least in part on the received signals. More specifically, the controller 1304 is configured to receive signals from the metering mechanism 320, the remote-control device 316, and/or the control interface 322 indicating a desired cutting height; compare the desired cutting height to the current cutting height; calculate the number and direction of rotations of the worm shaft 204 needed to produce desired cutting height (e.g., the adjustment vector); and output the adjustment vector to the blade height adjustment motor 308. While the illustrated controller 1304 is shown as a stand-alone controller, it is understood that the controller 1304 may be integrated into partially or fully with the controller 304 of the tool 12.

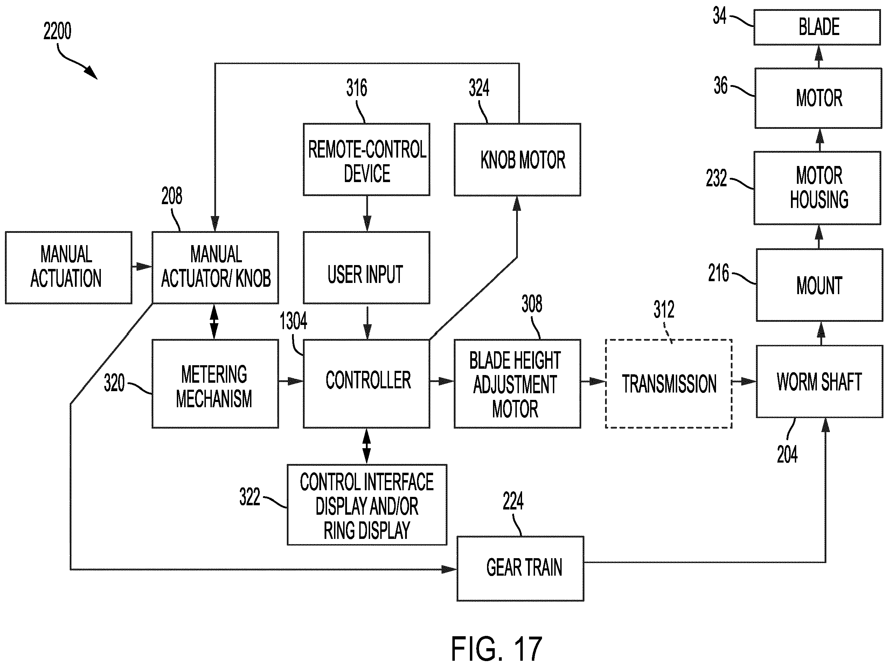

FIG. 17 illustrates another embodiment of the height adjustment mechanism 2200. The height adjustment mechanism 2200 is substantially similar to the height adjustment mechanism 1200 so only the differences will be described herein. The height adjustment mechanism 2200 includes a knob motor 324 operably coupled to the controller 1304 and mechanically coupled to the manual actuator 208. During use, the knob motor 324 may be configured to synchronously actuate as the blade height adjustment motor 308 is actuated. Stated differently, the knob motor 324 is configured to rotate the manual actuator 208 so that the movement of the manual actuator 208 matches the current movement of the blade 34 even when the actuator 208 is not in direct mechanical communication therewith. For example, if the controller 1304 instructs the blade adjustment motor 208 to lower the blade 34 a pre-determined amount, the knob motor 324 will subsequently rotate the actuator 208 to reflect the lowered blade relative to the surrounding indicia 260.

In still other embodiments, the knob motor 324 may also be configured to sense the rotation of the manual actuator 208 and output a corresponding signal to the controller 1304. In such embodiments, the controller 1304 may then be configured to output signals to other aspects of the height adjust mechanism 2200 to adjust the cutting height in accordance with the direction and magnitude of the detected rotation. In still other embodiments, the controller 1304 may be configured to output signals to the control interface 322 to adjust the orientation and visual appearance of the control interface 322 in accordance with the direction and magnitude of the detected rotation.

In still other embodiments, the manual actuator knob 208 may be mechanically attached to the blade adjustment motor and/or worm shaft directly such that any adjustments made to the cutting height CH are reflected by the actuator 208 without the need of a separate motor.

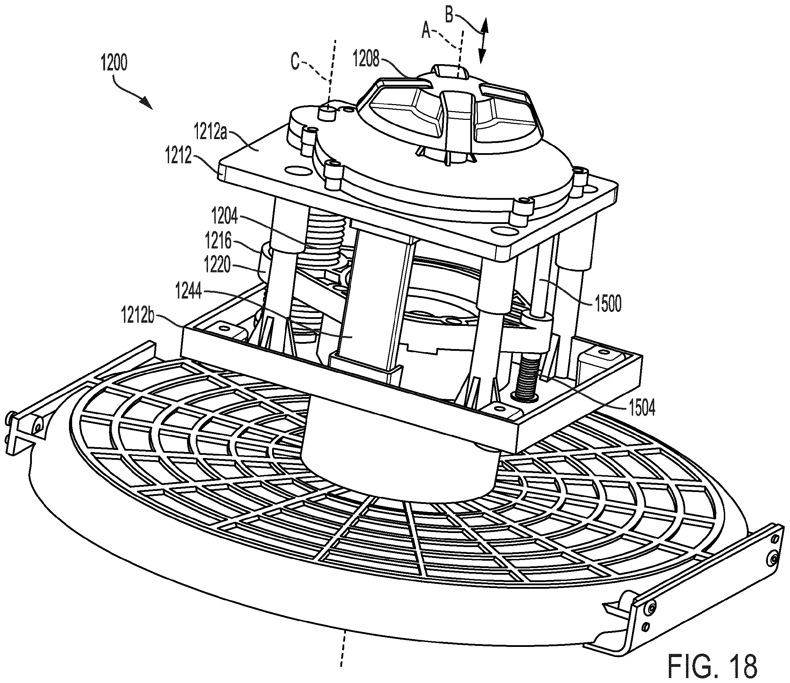

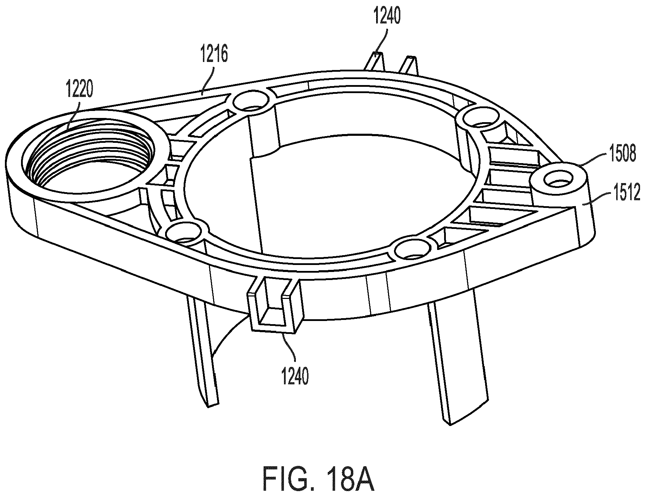

Figs. 18 and 18A relate to an alternate embodiment of a height adjustment mechanism 1200. The height adjustment mechanism 1200 functions similarly to the height adjustment mechanism 200 and therefore only the differences will be discussed in detail herein. The height adjustment mechanism 1200 includes a bracket 1212 coupled to the deck 14, a mount 1216 movably coupled to the bracket 1212, a manual actuator 1208, and a worm shaft 1204 extending between and configured to transmit force between the bracket 1212 and the mount 1216.

The bracket 1212 of the height adjustment mechanism 1200 includes an upper plate 1212a, a lower plate 1212b axially spaced from the upper plate 1212a along the axial direction B, and a plurality of channels 1244 extending between the upper plate 1212a and the lower plate 1212b.

The channels 1244 of the bracket 1212 extend generally parallel to the axis of rotation A and are configured to act as guides for the mount 1216. More specifically, the bracket 1212 includes two channels 1244 each positioned along the exterior of the plates 1212a, 1212b opposite from one another relative to the axis A (e.g., 180-degrees from each) and offset 90-degrees from the location of the worm shaft 1204.

The bracket 1212 of the height adjustment mechanism 1200 also includes one or more alignment rods 1500 extending generally parallel to the axis of rotation A and configured to guide the mount 1216 as it travels between the first position and the second position. More specifically, the bracket 1212 includes a single alignment rod 1500 positioned opposite the worm shaft 1204 relative to the axis of rotation A (e.g., 180-degrees offset therefrom) such that the alignment rod 1500, the two channels 1244, and the worm shaft 1204 are all positioned equally about the axis of rotation A (e.g., every 90 degrees). However, in alternative embodiments more or fewer alignment rods 1500 may be present in other locations. In still other embodiments, the number alignment rods 1500 and channels 1244 may be adjusted and positioned so that, taken as a group, they are spaced equally about the axis of rotation A. In the illustrated embodiment, the alignment rod 1500 includes an elongated rod being substantially constant in cross-sectional shape (e.g., circular) allowing the mount 1216 to smoothly travel along the axial length thereof.

The bracket 1212 of the height adjustment mechanism 1200 also includes a biasing member 1504 in operable communication with the mount 1216 and configured to apply a biasing force against the mount 1216 in the general direction of the first position. More specifically, the biasing member 1504 is positioned such that it applies the biasing force against the mount 1216 at a location offset from the threaded interface 1220 (e.g., the worm shaft 1204) in a direction axially parallel to the axis A in the direction of the top end plate 1212a. In the illustrated embodiment, the biasing member applies the biasing force to the mount 1216 at a location opposite the threaded interface 1220 relative to the axis A (e.g., 180-degrees offset therefrom). However, in other embodiments, more or fewer biasing members 1504 may be present to apply a biasing force against the mount 1216 at various locations about the axis A that are offset from the threaded interface 1220. For example in some embodiments the bracket 1212 may include multiple biasing members 1504 applying a biasing force against the mount 1216 at multiple locations about the axis A such that the biasing members 1504 and threaded interface 1220, together, are spaced evenly about the axis A.

As shown in Fig. 18, the biasing member 1504 includes a coil spring compressed between and in contact with the lower plate 1212b and the hub 1508 of the mount 1216 (discussed below). More specifically, the coil spring is wound about alignment rod 1500 which, in turn, provides additional support thereto. While the illustrated biasing member 1504 includes a coil spring, it is understood that in other embodiments different forms of biasing member 1504 may be used such as, but not limited to, elastic bands, rubber bumpers, pneumatic springs, and the like.

As shown in Fig. 18A, the mount 1216 of the height adjustment mechanism 1200 includes a plate-like body 1218 having a plurality of projections 1240 each extending outwardly therefrom, and one or more hubs 1508 formed into the body 1218. During use, the mount 1216 is configured to move continuously in the axial direction B with respect to the bracket 1212 between a first position, in which the mount 1216 is positioned proximate the first plate 1212a of the bracket 1212, and a second position, in which the mount 1216 is positioned proximate the second plate 1212b. More specifically, the mount 1216 is configured to be supported by the bracket 1212 such that the body 1218 remains substantially normal to the axis A (e.g., normal to the channels 1244 and worm axis C) as it moves between the first position and the second position.

As shown in Fig. 18A, hub 1508 of the mount 1216 includes a hub 1508 configured to interact with and travel along the alignment rod 1500. More specifically, the hub 1508 includes an elongated boss 1512 defining an aperture therethrough that is sized to receive the alignment rod 1500 therein. Together, the axial height of the boss 1512 and size of the aperture are configured to restrict lateral movement between the rod 1500 and hub 1508 (e.g., perpendicular to the axis of rotation A), allow axial movement between the rod 1500 and hub 1208 (e.g., parallel to the axis of rotation A), and restrict the rod from becoming skewed relative to the mount 1216. By doing so, the interaction between the hub 1208 and the rod 1500 help to maintain the mount 1216 in a substantially normal orientation relative to the axis A while still allowing the mount 1216 to move axially between the first and second positions. In the illustrated embodiment, the hub 1508 includes a generally cylindrical boss with an axial height that is greater than the axial height of the plate-like body 1218. In other embodiments, different sizes and shapes of hub 1508 may be present depending on the level of support required and the size and shape of the rod 1500.

During use, the mount 1216 and the cutting module 30 are together continuously movable with respect to the bracket 1212 in the axial direction B between a first or raised position, and a second or lowered position. As the mount 1216 moves from the second position toward the first position, the primary motivating force is applied by the rotation of the worm shaft 1204 while a secondary biasing force is also applied in the direction of travel by the biasing member 1504 at a location offset from the worm shaft 1204. Together, the two forces help maintain the mount 1216 in a normal orientation relative to the axis A and minimize binding between the projections 1240 and the channels 1244.

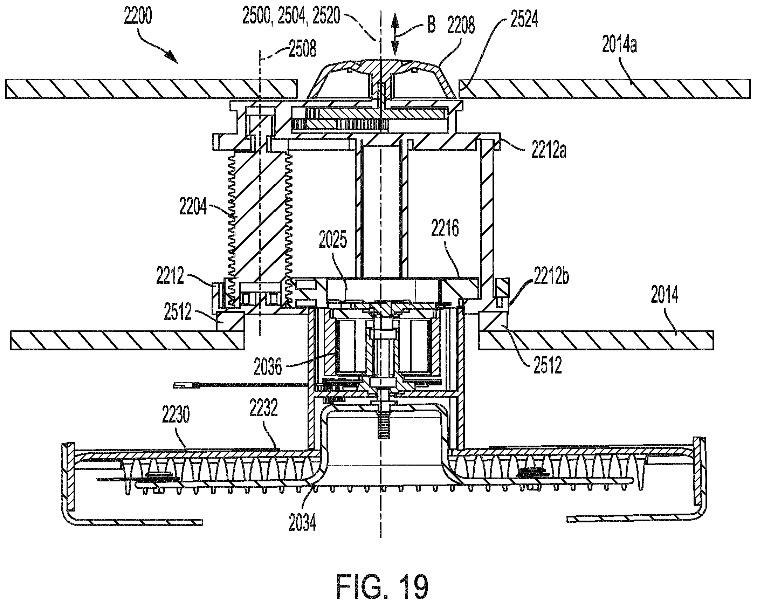

Figs. 19-21 relates to an alternate embodiment of a height adjustment mechanism 2200. The height adjustment mechanism 2200 functions similarly to the height adjustment mechanism 200 and therefore only the differences will be discussed in detail herein. The height adjustment mechanism 2200 includes a bracket 2212 defining a bracket axis 2500, a mount 2216 movably coupled to the bracket 2212 and defining a mount axis 2504, a manual actuator 2208, and a worm shaft 2204 driven by the manual actuator 2208 and configured to transmit force between the bracket 2212 and the mount 2216. During use, the worm shaft 2204 is configured to rotate about a worm shaft axis 2508 that is parallel to and radially offset from the bracket axis 2500 and the mount axis 2504.

The mount 2216 is also configured to serve as a mounting location for the cutting module 2030. More specifically, the cutting module mount 2232 is coupled to the mount 2216 via one or more fasteners so that the module mount 2232 and the mount 2216 move together as a unit. Since the motor 2036 is coupled to the module mount 2232, the motor 36 also moves together with the mount 2216 and the module mount 2232 such that the axis of rotation A and the mount axis 2504 remain co-axial. Furthermore, since the blade 2034 is rotatably mounted to the motor 2036 about the axis of rotation A, the blade 2034 is also movable together with the motor 2036, the cutting module mount 2232, and mount 2216. In some embodiments, the motor 2036 may be fixedly coupled to the module mount 2232 such that the two items move together as a unit. However, in still other embodiments, the motor 2036 may be coupled to the module mount 2232 via some form of flexible connector (not shown). In such embodiments, the connectors may allow relative movement between the motor 2046 and the mount 2232 and/or absorb any vibrations.

During use, the mount 2216 and the cutting module 2030 are together continuously movable with respect to the bracket 2212 in the axial direction B between a first or raised position, in which the mount 2216 is positioned proximate the upper plate 2212a, and a second or lowered position, in which the mount 2216 is positioned proximate the lower plate 2212b.

The height adjustment mechanism 2200 also includes a plurality of supports 2512 positioned between the deck 2014 and the bracket 2212 and configured to absorb and/or dampen at least a portion of any shocks or vibrations transmitted therebetween. The supports 2512 are also configured to permit relative motion between the deck 14 and the bracket 2212. More specifically, the lower plate 2212b of the bracket 2212 is coupled to the deck 2014 via the plurality of supports 2512.

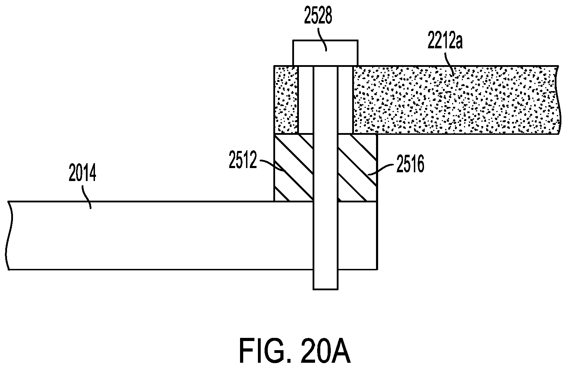

As shown in Fig. 20A, each support 2512 includes a block 2516 formed of elastic material (e.g., rubber, neoprene, and the like) and defining an aperture sized to allow a fastener 2528 to pass therethrough. Once assembled, the block 2516 is positioned between the bracket 2212 and the deck 2014 (see Fig. 20A) so that relative movement between the deck 2014 and the bracket 2212 is possible by selectively deforming the blocks 2516. The blocks 2516 are also resilient such that when any forces applied to the bracket 2212 are removed, the bracket 2212 will return to its normal or rest position (e.g., when the bracket axis 2500 is oriented vertically or normal to the support surface S). While the illustrated supports 2512 include blocks of elastic material, it is understood that in other embodiments different forms of connection and materials may be used.

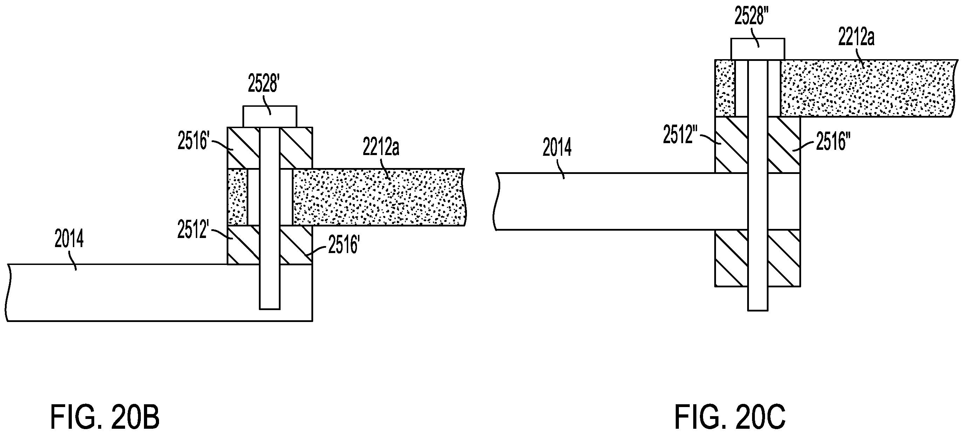

Figs. 20B and 20C illustrate alternative forms of support 2512' and 2512". Each support 2512' includes a pair of blocks 2516', with a first block 2516' positioned between the lower plate 1212b and the deck 2014 and a second block 2516' positioned above the lower plate 1212b so that the lower plate 1212b is captured therebeween. The two blocks 2516' and lower plate 1212b are then secured to the deck 14 via a fastener 2528'. Alternatively, each support 2512" includes a pair of blocks 2516", with a first block 2516" positioned between the lower plate 1212b and the deck 2014 and a second block 2516" positioned below the deck 2014 opposite the lower plate 1212b. The two blocks 2516" are then secured to the deck 15 via a fastener 5258".

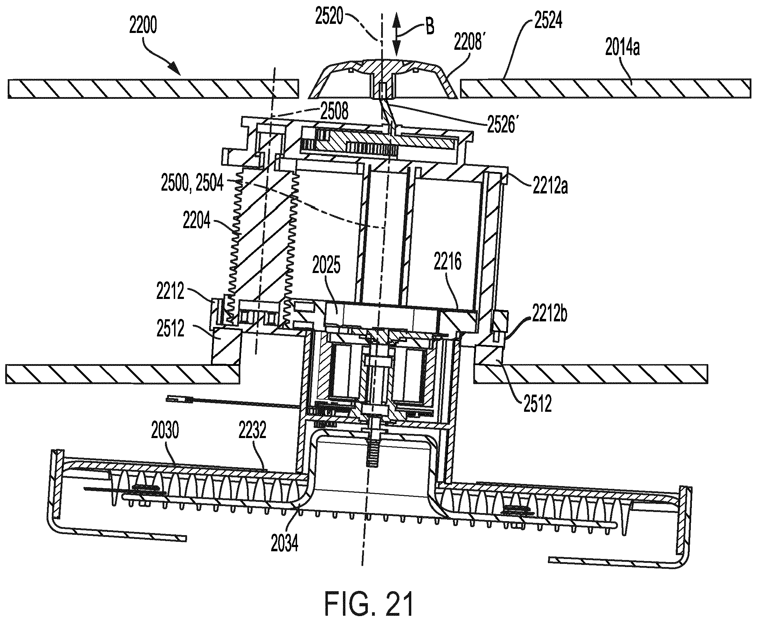

During use, the bracket 2212, mount 2216, motor housing 2232, motor 2036, and blade 2034 are all interconnected to form a cutting sub-assembly 2025. The cutting sub-assembly 2025, in turn, is then movable relative to the deck 2014 via the supports 2512 as a single unit (see Fig. 21). More specifically, the cutting sub-assembly 2025 can generally translate vertically (e.g., axially along the bracket axis 2500), translate laterally (e.g., perpendicular to the bracket axis 2500), and pivot causing the angle of the bracket axis 2500 to change relative to the deck 14). However, in other embodiments the supports 2512 may be configured to permit some forms of movement but restrict others (e.g., allow vertical translation and rotation but restrict lateral translation).

In some embodiments, the movement between the sub-assembly 2025 and the deck 2014 may be the result of external forces acting on one of the sub-assembly 2025 and/or the deck 2014 during the lawn cutting process. For example, a stone or other debris contacting the motor housing 2232 may cause the sub-assembly 2025 to pivot and/or translate out of the way. In other embodiments, the motor housing 2232 may be acted upon by the support surface S causing the sub-assembly 2025 to move relative to the deck 2014. In still other embodiments, an impact or shock force applied to the deck 14 causing the supports 2512 to absorb the resulting forces therebetween. In still other embodiment, the any vibrations created by the rotation of the blade 2034 may be isolated from the remainder of the tool 12 via the supports 2512.

In still other embodiments, the relative orientation of the sub-assembly 2025 and the deck 2014 may be actively adjusted by the user and/or a controller. More specifically, in some embodiments one or more additional actuators may be present (not shown) to actively adjust the relative orientation and position of the sub-assembly 2025 relative to the deck 2014. In such embodiments, the active adjustments may be made so that the orientation of the blade 2034 and motor housing 2232 can better accommodate the contour of the support surface S, avoid detected debris, and the like. In still other embodiments, the tool 12 may include one or more mechanical forms of adjustment (e.g., levers, cams, and the like) to allow the user to pre-set the relative position and orientation of the sub-assembly 2025. For example the user may be able to activate a cam that elevates the leading edge of the cutting module mount 2232.

The height adjustment mechanism 2200 also includes a manual actuator 2208. The manual actuator 208 includes a knob that is rotatable with respect to the deck 2014 upon receipt of a manual input from the user (e.g., applying torque thereto). While the illustrated actuator 2208 is a rotatable knob, it is understood that other forms of manual actuator 2208, such as sliders, buttons, and the like, may also be used. In the illustrated embodiment, the manual actuator is rotatable by the user about an actuator axis 2520; however, in embodiments where the actuator 2208 undergoes other motions or inputs (e.g., sliding, switches, touch screens, and the like), the location of the actuator 2208 may be measured relative to an actuator datum 2520.

In the illustrated embodiment, the manual actuator 2208 is rotatably coupled to the bracket 2212 and is movable together therewith (e.g., the axis or datum 2520 of the manual actuator 2208 remains fixed relative to the bracket 2212; see Fig. 19). As such, the manual actuator 2208 may move relative to the outer surface 2014a of the deck 2014 as the sub-assembly 2025 moves relative to the deck 14. In such embodiments, the aperture 2524 through which the manual actuator 2208 protrudes may be oversized sized to accommodate for this motion so that it does not bind or restrict the motion of the sub-assembly 2025 during operation.

In other embodiments, the manual actuator 2208 may be mounted separate from the bracket 2212 such that axis or datum 2520 of the manual actuator 2208 remains stationary relative to the outer surface 2014a of the deck 14 independent of the motion of the sub-assembly 2025 (see Fig. 21). For example, the manual actuator 2208' is fixedly mounted to the outer surface 2014a and is operably connected to the worm shaft 2204 via a flexible drive shaft 2524'. In such embodiments, the flexible drive shaft 2524' may include a tightly coiled spring or other element that is able to transmit torque while being flexible in shape to accommodate the relative motion between the sub-assembly 2025 and the axis or datum 2520. In other examples the drive shaft 2524' may include universal joints, and the like. In still other embodiments, the manual actuator 2208 may be attached electronically to the sub-assembly 2025 via flexible wires to transmit signals therebetween.

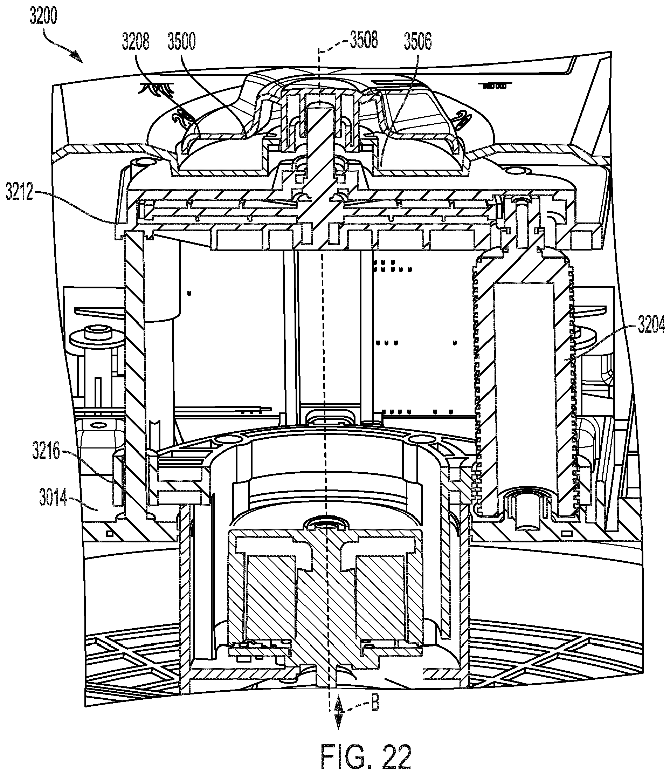

Figs. 22-25 relate to an alternate embodiment of a height adjustment mechanism 3200. The height adjustment mechanism 3200 functions similarly to the height adjustment mechanism 200 and therefore only the differences will be discussed in detail herein. The manual actuator 3208 of the height adjustment mechanism 3200 includes a knob assembly 3500 in operable communication with and configured to selectively drive the worm shaft 3204, and a stator assembly 3506 configured to selectively engage the knob assembly 3500. During use, the knob assembly 3500 of the manual actuator 3208 is adjustable between an unlocked configuration, in which the knob assembly 3500 is able to rotate about a knob axis 3508 with respect to the deck 3014 upon receipt of manual input from the user (e.g., applying torque thereto), and a locked configuration, in which the knob assembly 3500 is fixed relative to the deck 3014 and unable to rotate with respect thereto. When the knob assembly 3500 is in the unlocked configuration, subsequent turning of the knob assembly 3500 relative to the deck 3014 is configured to output a torque to the worm shaft 3204 causing the worm shaft 3204 to rotate with respect to the bracket 3212 and causing the mount 3216 to travel in the axial direction B with respect thereto. When the knob assembly 3500 is in the locked configuration, the inability of the knob assembly 3500 to rotate similarly locks the worm shaft 3204 and the cutting height CH into place. This makes sure the cutting height CH does not drift during operation.

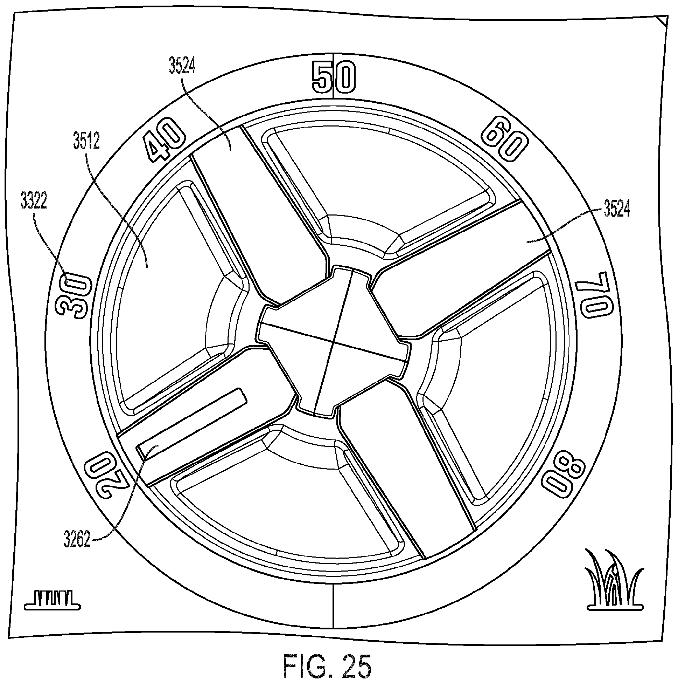

The knob assembly 3500 includes a knob 3512, a drive shaft 3516, and a locking sleeve 3520. The knob 3504, in turn, has a disk-shaped body and defines the knob axis 3508. More specifically, the body of the knob 3512 has an exterior with ergonomically shaped contours configured to allow the user to have improved grip and more easily manipulate the knob 3512 relative to the exterior 3014a of the tool 12. In the illustrated embodiment, the exterior of the knob 3512 includes four ridges 3524 extending axially from the top surface thereof and spaced 90 degrees apart in a radial orientation. The exterior of the knob 3512 also includes at least one knob indicia 3262 configured to correspond with indicia 3322 encircling the knob 3512 to visually indicate to the user the current cutting height and/or other operational information of the tool 12 (see Fig. 25). In addition to being rotatable about the knob axis 3508, the knob 3504 may also be axially translated between a first or rest position and a second or actuated position.

The drive shaft 3516 of the knob assembly 3500 includes an elongated shaft extending between and coupled to the knob 3504 and the transmission mechanism 3224 to transmit torque therebetween. The drive shaft 3516 is also configured to allow the knob 3504 to move axially with respect to the bracket 3212. In the illustrated embodiment, the drive shaft 3516 is received within a recess 3528 formed by the knob 3504 that is shaped such that the resulting joint causes the two elements to rotate about the knob axis 3508 as a single unit but permits relative axial motion therebetween. In other embodiments, drive shaft 3516 may be fixedly coupled to the knob 3504 while being allowed to slide axially with respect to the transmission mechanism 3224 (e.g., with respect to the first gear 3224a).

While the illustrated drive shaft 3516 is formed separately from the knob 3504, it is understood that in other embodiments the knob 3504 and drive shaft 3516 may be formed together as single unit. In still other embodiments where the knob 3504 is in electrical communication with an actively driven height adjustment mechanism 3200, the drive shaft 3516 may not be used and instead may be replaced by a sensor (not shown) and a set of wires.

The locking sleeve 3520 of the knob assembly 3500 is configured to extend between and selectively engage both the knob 3504 and the stator assembly 3506 (described below) to transmit torque therebetween. More specifically, the locking sleeve 3520 includes a substantially cylindrical shaped body having a first interface 3532 configured to interact with the knob 3504, and a second interface 3536 configured to interact with the stator assembly 3506. The first interface 3536 includes a series of notches and grooves configured to mesh with corresponding geometry in the knob 3504 so that the knob 3504 and locking sleeve 3520 rotate together as a unit. While the illustrated sleeve 3520 is shown being formed separately from the knob 3504, it is understood that in other embodiments the two elements may be formed together as a single piece.

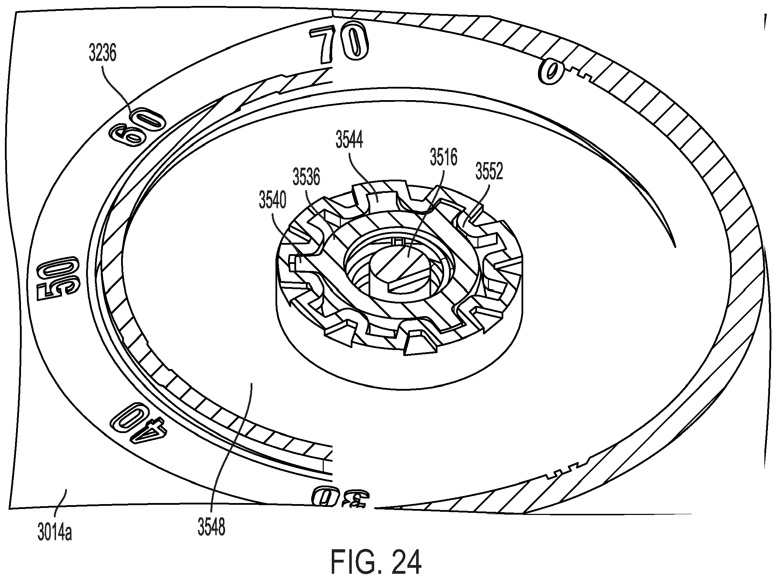

The second interface 3536 of the sleeve 3520 includes a plurality of teeth 3540 (see Fig. 24) extending radially outwardly therefrom, each tooth 3540 being sized to be received within a corresponding pocket 3544 of the stator assembly 3506 (described below). More specifically, the teeth 3540 are sized and shaped to be received within correspondingly shaped pockets 3544 of the stator assembly 3506 to rotatingly lock the sleeve 3520 with respect to the stator assembly 3506. In the illustrated embodiment, the locking sleeve 3520 includes three teeth 3540 extending radially outwardly from the sleeve body. However, in other embodiments, different forms and shapes of teeth may be present.

During use, the sleeve 3520 is movable axially between a locked or first position, in which the teeth 2540 are received within the corresponding pockets 3544 of the stator assembly 3506 such that the sleeve 3520 and stator assembly 3506 are rotationally locked, and an unlocked or second position, in which the teeth 3540 are removed from the pockets 3544 of the stator assembly 3506 such that the sleeve 3520 may rotate independently of the stator assembly 3506.

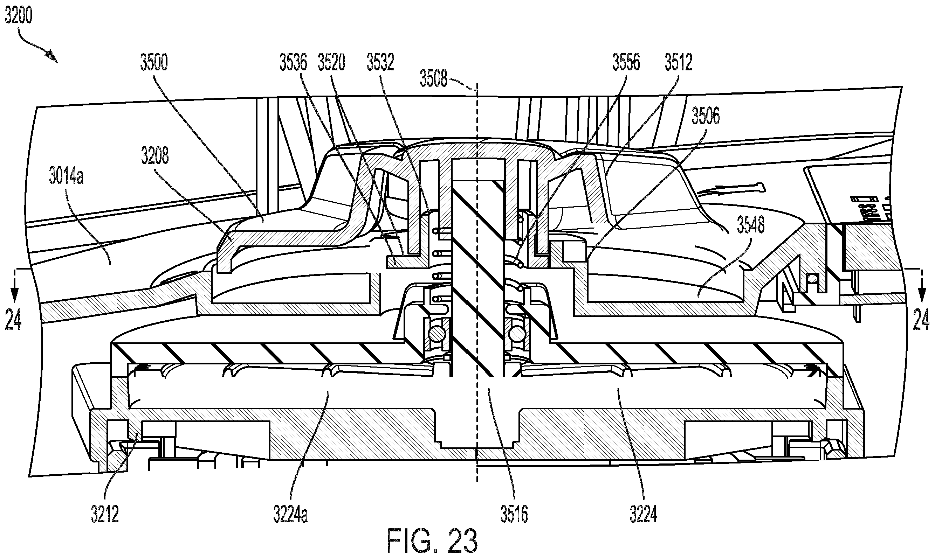

As shown in Fig. 23, the stator assembly 3506 of the manual actuator 3208 includes a recess 3548 formed in the outer surface 3014a of the tool 12, an aperture 3552 extending through the outer surface 3014a of the tool 12, and an array of pockets 3544 sized to selectively receive a corresponding tooth 3540 of the sleeve 3520 therein. In the illustrated body, the stator assembly 3506 is formed integrally as part of the outer housing of the tool 12. However, in other embodiments, the stator assembly 3506 may include a separately formed insert that is attached or otherwise installed on the outer housing of the tool 12.

As shown in Fig. 23, the recess 3548 of the stator assembly 3506 is sized to receive at least a portion of the knob 3504 therein providing sufficient clearance to allow the knob 3504 to rotate about the knob axis 3508 and be axially depressed from the first position to the second position. In the illustrated embodiment, the recess 3548 also includes indicia 3322 positioned around the perimeter thereof to correspond with the knob indicia 3236 of the knob 3504 to visually indicate to the user information about the current operating parameters of the tool 12 (e.g., the cutting height).

As shown in Fig. 24, the array of pockets 3544 are formed circumferentially about the aperture 3552. Each pocket 3544, in turn, is sized to receive a single tooth 3540 of the sleeve 3520 therein and restrict any rotational movement with respect thereto. Each pocket 3544 is also open axially on at least one side to allow the respective tooth 3540 to axially enter into and be removed from the pocket 3544 during use. In the illustrated embodiment, the array 3544 includes more pockets 3544 than the number of teeth 3540 present on the sleeve 3520. However, in other embodiments the number of pockets 3544 may be increased to increase the number of discreet positions the knob assembly 3500 may be locked. In still other embodiments, the number and location of the pockets 3544 may poisoned so that the number of discrete locking positions correspond with specific indicia 3322 on the outer surface 3014a of the tool 12. For example, if the indicia 3322 identifies seven discrete setting locations, the pockets 3544 may be positioned so that the knob indicia 3262 can be locked into a location that directly aligns with each setting.

The knob assembly 3500 also includes a biasing member 3556 in operable communication with at least one of the sleeve 3520 and the knob 2504 and configured to bias the knob assembly 3500 into the locked configuration. More specifically, the biasing member 3556 is configured to bias the knob 3504 toward its rest position and the sleeve 3520 toward its locked position. While the illustrated biasing member 3556 includes a coil spring in other embodiments different forms biasing members may be used. In still other embodiments, the biasing member 3556 may be replaced by a detent system (not shown) whereby the user can place the knob 2504 in the second position and the knob 2504 will remain in the second position until physically directed back into the first position.

During operation, the knob assembly 3500 is biased into and remains in the locked configuration such that the knob assembly 3500 is unable to rotate with respect to the deck 14. With the knob assembly 3500 assembly locked, the worm shaft 3204 is also locked from rotating such that the cutting height cannot change.

In order to adjust the cutting height, the user first biases the knob 3504 axially from the rest position into the actuated position (e.g., axially moving the knob 3504 downwardly into the recess 3548 of the stator assembly 3506) which in turn biases the sleeve 3520 from its first position toward its second position. By doing so, the teeth 3540 of the sleeve 3520 are axially removed from their respective pockets 3544 - placing the knob assembly 3500 in the unlocked configuration.

Once unlocked, the user may rotate the knob 3504 about the knob axis 3508 which in turn causes the worm shaft 4204 to rotate and the mount 3216 to move along axial direction B. As described above, the direction of rotation of the knob 3504 about the knob axis 3408 determines the direction that the mount 3216 moves while the magnitude of the rotation determines the magnitude of the movement of the mount 3216.

Once the knob 3204 has been rotated into the position corresponding with the desired cutting height, the user may then release the knob 3504 whereby the biasing member will bias it axially upwardly back into the first or rest position. By doing so, the teeth 3540 of the sleeve 3520 are axially introduced back into a set of pockets 3544. The knob assembly 3500 is then returned to the locked position.

## Claims

1. A robotic garden tool comprising:
a deck;
a blade motor configured to rotate a blade about a blade axis;
a mount axially movable with respect to the deck along the blade axis; wherein the blade motor is coupled to the mount;
a worm shaft mounted for rotation with respect to the deck about a worm axis, the worm shaft forming a threaded interface with the mount such that rotation of the worm shaft about the worm axis causes the mount to move axially with respect to the deck; and
a manual actuator configured to move with respect to the deck in response to receiving a manual actuation force by an operator, wherein the manual actuator is in operable communication with the worm shaft such that movement of the manual actuator with respect to the deck causes the worm shaft to rotate about the worm axis.

2. The robotic garden tool of claim 1, further comprising a gear train positioned between and in operable communication with both the manual actuator and the worm shaft to transmit a force therebetween.

3. The robotic garden tool of claim 2, wherein the gear train reduces the mechanical advantage of the manual actuator relative to worm shaft.

4. The robotic garden tool of claim 1, further comprising a bracket fixedly coupled to the deck, wherein the bracket includes a first plate, a second plate opposite the first plate, and a channel extending between the first plate and the second plate.

5. The robotic garden tool of claim 4, wherein the channel extends in a direction parallel to the axis of rotation.

6. The robotic garden tool of claim 4, wherein the mount further comprises a projection at least partially positioned within and movable along the channel in a direction parallel to the axis of rotation.

7. The robotic garden tool of claim 1 wherein the manual actuator includes a dial rotatable with respect to the deck, and wherein the manual actuator is configured to rotate in response to receiving a manual actuation force by an operator.

8. The robotic garden tool of claim 1, wherein the worm axis is parallel to and offset from the blade axis.

9. The robotic garden tool of claim 1, further comprising a cutting module including a cutting module mount at least partially encompassing the blade, and wherein the blade motor is coupled to the cutting module mount so that the cutting module mount, the blade motor, and the mount move together as a single unit.

10. The robotic garden tool of claim 1, further comprising an indicia provided on the exterior surface of the garden tool, the indicia is positioned adjacent the manual actuator and is configured to indicate the vertical position of the blade.

11. The robotic garden tool of claim 1, wherein the mount movable with respect to the deck along the blade axis between a first position in which the blade defines a first cutting height and a second position in which the blade defines a second cutting height different than the first cutting height, wherein the blade motor is coupled to the mount so that the blade motor and the blade mount move together as a single unit;
a blade height adjustment motor in operable communication with the mount, wherein operation of the blade height adjustment motor causes the mount to move between the first position and the second position;
a first user input into which a user can enter at least one of a desired cutting height, and a desired cutting height change;
a controller in operable communication with the blade height adjustment motor, and the first input, and wherein the controller is configured to output an adjustment vector to the blade height adjustment motor based at least in part on desired cutting height entered into the first user input.

12. The robotic garden tool of claim 11, further comprising a second user input into which the user can enter a desired cutting height, wherein the controller is in operable communication with the second user input, and wherein the controller is configured to output an adjustment vector to the blade height adjustment motor based at least in part on the desired cutting height entered into one of the first user input and the second user input.

13. The robotic garden tool of claim 12, wherein the at least one of the first user input and the second user input includes a remote-control device in operable communication with the controller wirelessly.

14. The robotic garden tool of claim 12, wherein at least one of the first user input and the second user input is mounted to the garden tool.

15. The robotic garden tool of claim 1, further comprising a knob motor configured to rotate the manual actuator with respect to the deck.
